# EUROPEAN PATENT APPLICATION

(11) **EP 3 825 007 A1**
(43) Date of publication of application: **26.05.2021**
(21) Application number: 18926448.4
(22) Date of filing: 06.12.2018
(51) Int. Cl.: B02C 18/06, B02C 18/14, B02C 18/18

(54) **GRINDER**

(30) Priority: 17.07.2018 JP 2018134510
(71) Applicant: Matsui Mfg. Co., Ltd., Osaka 542-0012 (JP)
(72) Inventor: YAMASHITA, Saiji, Hirakata-shi, Osaka 573-1132 (JP)
(74) Representative: Cabinet Beaumont
(86) International application number: PCT/JP2018/044983
(87) International publication number: WO 2020/017073

(57) **Abstract**

A granulator capable of uniformizing the particle size of material-to-be granulated is provided. The granulator comprises a housing having an opening portion at an upper part, a rotary blade mounted to a rotating shaft horizontally placed in the housing and a stationary blade to be engaged with the rotary blade and placed in the housing. The rotary blade is provided with a plurality of blade portion groups arranged adjacent to each other along a direction of the rotating shaft, and each of the plurality of blade portion groups is provided with a plurality of blade portions formed about the rotating shaft at an outer periphery of a cylindrical body fit onto the rotating shaft.

## Description

### [Technical Field]

The present invention relates to a granulator.

### [Background Art]

Generally, a sprue runner taken out as an unnecessary object upon injection molding of plastic or defective molding generated when molding fails (also referred to as to-be-granulated material) is granulated so as to be reusable as molding material. If to-be-granulated material is granulated, it is desirable for the material to have a shape closer to the shape of a pellet as material before molding, and a low-speed granulator is mainly used.

Patent Document 1 discloses a granulator that first crushes a sprue runner loaded from a loading hopper by a crushing blade for allowing a granulating blade to easily bite into the sprue runner and then granulates the crushed sprue runner into granulated material with a predetermined particle shape by the granulating blade.

### [Prior Art Document]

### [Patent Document]

[Patent Document 1] Japanese Patent Application Laid-Open No. 2010-42384

### [Summary of Invention]

### [Problems to be Solved by Invention]

In the conventional granulator, however, the granulating blade is formed by arrays of blades each provided at the outer periphery of the cylindrical bodies about a rotating shaft that are fit onto the rotating shaft at suitable intervals, so that cylindrical grooves are formed between the arrays of blades. Thus, if a part of the material-to-be granulated is fit into the space between the arrays of blades, the material-to-be granulated partially stays there, which impairs the efficiency of granulation and reduces a granulating capability per unit time. Furthermore, rubbing of the material-to-be granulated against the grooves may generate powder, resulting in varying particle size of the granulated material.

The present invention is made in view of such circumstances, and an object of the present invention is to provide a granulator that is able to improve a granulating capability and uniformize the particle size of granulated material while reducing the generation of powder.

### [Means for Solving Problems]

### [Effect of Invention]

A granulator according to the present invention comprising a housing having an opening portion at an upper part, a rotary blade mounted to a rotating shaft horizontally placed in the housing and a stationary blade to be engaged with the rotary blade and placed in the housing, and granulating to-be-granulated material by cooperating with each other the rotary blade and the stationary blade. The rotary blade is provided with a plurality of blade portion groups arranged adjacent to each other along a direction of the rotating shaft, each of the plurality of blade portion groups is provided with a plurality of blade portions formed about the rotating shaft at an outer periphery of a cylindrical body fit onto the rotating shaft. Each of the plurality of blade portions is formed with a cutting edge at the leading edge portion about the rotating shaft, and a radial dimension of the plurality of blade portions from a center of the rotating shaft decreases in a stepwise manner along the direction of the rotating shaft for each of the plurality of blade portion groups

According to the present invention, the blade portion groups are provided instead of the cylindrical grooves between the arrays of blades, which can improve a granulating capability and uniformize the particle size of granulated material while reducing the generation of powder.

### [Brief Description of Drawings]

FIG. 1 is a plan view illustrating a first example of the configuration of the main components of a granulator according to a present embodiment.
FIG. 2 is a side view illustrating the first example of the configuration of the main components of the granulator according to the present embodiment.
FIG. 3 is an external perspective view illustrating the first example of the configuration of a granulating blade according to the present embodiment.
FIG. 4 is an elevation view illustrating the first example of the configuration of the granulating blade according to the present embodiment.
FIG. 5 is a vertical cross-sectional view of the main components taken along line AA' in FIG. 4.
FIG. 6 is a schematic view illustrating one example of a state in which to-be-granulated material S is caught between the granulating blade and a stationary blade according to the present embodiment.
FIG. 7 is a schematic view illustrating one example of a state in which the to-be-granulated material S is being granulated by the granulating blade according to the present embodiment.
FIG. 8 is a plan view illustrating one example of the configuration of the main components of a granulator as a comparative example.
FIG. 9 is a schematic view illustrating one example of a state in which to-be-granulated material S is caught between a granulating blade and a stationary blade as a comparative example.
FIG. 10 is a schematic view illustrating one example of a state in which the to-be-granulated material S is being granulated by the granulating blade as a comparative example.
FIG. 11 is an external perspective view illustrating a second example of the configuration of the granulating blade according to the present embodiment.
FIG. 12 is a vertical cross-sectional view illustrating the second example of the configuration of the main components of the granulating blade according to the present embodiment.
FIG. 13 is a schematic view illustrating one example of a state in which to-be-granulated material S is being granulated by the granulating blade according to the present embodiment.
FIG. 14 is a schematic view illustrating one example of the configuration of an inside wall of a fixed side wall according to the present embodiment.
FIG. 15 is a vertical cross-sectional view illustrating the main components of the fixed side wall according to the present embodiment.
FIG. 16 is a plan view illustrating the second example of the configuration of the main components of the granulator according to the present embodiment.
FIG. 17 is a schematic view illustrating another example of the shape of each blade portion of the granulating blade.
FIG. 18 is a plan view illustrating a third example of the configuration of the main components of the granulator according to the present embodiment.
FIG. 19 is a plan view illustrating a fourth example of the configuration of the main components of the granulator according to the present embodiment.
FIG. 20A illustrates one example of the main components near the stationary blade.
FIG. 20B illustrates one example of the main components near the stationary blade.
FIG. 20C illustrates one example of the main components near the stationary blade.
FIG. 21 is a side view illustrating one example of the main components of a granulating blade according to Embodiment 2.
FIG. 22 is a side view illustrating one example of the main component near the granulating blade of the granulator according to Embodiment 2.
FIG. 23 is a schematic view illustrating one example of a state in which to-be-granulated material S is being discharged.
FIG. 24 is a schematic view illustrating one example of a state in which to-be-granulated material S is being discharged.
FIG. 25 is a plan view illustrating another example of the configuration of the main components of the granulator according to Embodiment 2.
FIG. 26 is a side view illustrating another first example of the configuration of the main components of the granulator according to Embodiment 2.
FIG. 27 is a side view illustrating another second example of the configuration of the main components of the granulator according to Embodiment 2.
FIG. 28 is a side view illustrating one example of an oblique pusher.
FIG. 29 is a side view illustrating one example of a vertical pusher.
FIG. 30A illustrates one example of a rotative pusher.
FIG. 30B illustrates one example of a rotative pusher.
FIG. 31 is a plan view illustrating a first example of the configuration of the main components of a double-shaft granulator.
FIG. 32 is a side view illustrating the first example of the configuration of the main components of the double-shaft granulator.
FIG. 33 is a plan view illustrating a second example of the configuration of the main components of the double-shaft granulator.
FIG. 34 is a side view illustrating the second example of the configuration of the main components of the double-shaft granulator.

### [Mode for Carrying Out Invention]

### Embodiment 1

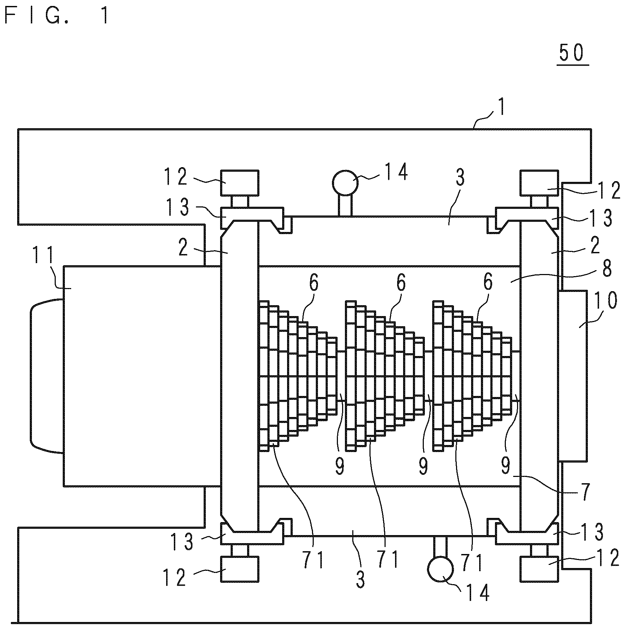

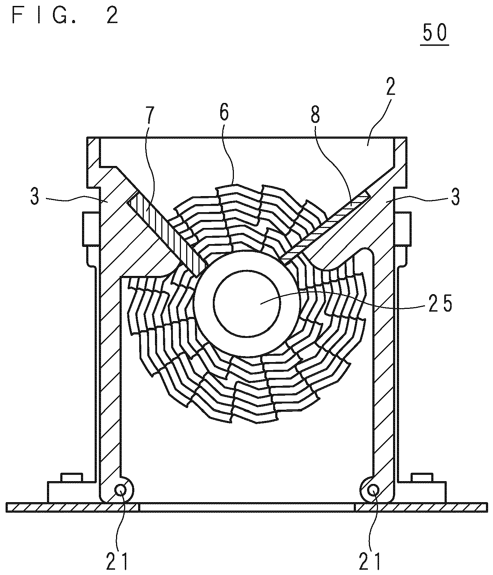

The present invention will be described below with reference to the drawings depicting embodiments. FIG. 1 is a plan view illustrating a first example of the configuration of the main components of a granulator 50 according to a present embodiment while FIG. 2 is a side view illustrating the first example of the configuration of the main components of the granulator 50 according to the present embodiment. It is noted that a loading hopper is not illustrated in FIGs. 1 and 2. As illustrated in FIGs. 1 and 2, on the top surface of a supporting base 1, a pair of fixed side walls 2 and 2 made of metal are oppositely disposed so as to be spaced at a suitable length while on both ends of the fixed side walls 2 and 2, a pair of pivotable side walls 3 and 3 made of metal are arranged so as to be interposed between the fixed side walls 2 and 2. This arrangement enables formation of a housing by the fixed side walls 2 and 2 and the pivotable side walls 3 and 3. The housing of the granulator 50 has opening portions at the upper part and the lower part thereof.

Meanwhile, a bearing 10 is mounted on substantially the center of one of the fixed side walls 2 while a reduction gear 11 attached with an electric motor is mounted on the other one of the fixed side walls 2. A rotating shaft 25 coordinating with a motor shaft of the electric motor via the reduction gear 11 is supported between the fixed side walls 2 and 2.

The space (granulation chamber) defined by the fixed side walls 2 and 2 and the pivotable side walls 3 and 3 accommodates granulation blades 6, 6 and 6 as rotary blades fit onto the rotating shaft 25. A cylindrical spacer 9 is fixed between the granulating blades 6 and 6 that are disposed so as to be spaced at an appropriate interval. The details of the granulating blade 6 will be described later.

Fulcrum shafts 21 are disposed in parallel with the direction of the rotating shaft 25 substantially vertically below the rotating shaft 25 on a surface of the pivotable side wall 3 near the fixed side wall 2. The pivotable side walls 3 and 3 can pivot about the fulcrum shafts 21 and by opening the pivotable side walls 3 and 3, the inside of the housing is upwardly opened. A stationary blade 7 is fastened to the inside of one of the pivotable side walls 3 by bolts (not illustrated) so as to be downwardly inclined toward the inside for granulating material to be granulated (hereinafter, also referred to as material-to-be granulated) (for example, a defective molding or surplus molding as well as a sprue runner) by cooperating with each of the granulating blades 6.

Alternatively, a fall prevention plate 8 for preventing material-to-be granulated from falling downward is fastened to the inside of the other one of the pivotable side walls 3 by bolts (not illustrated) so as to be downwardly inclined toward the inside.

At the four corners of the housing formed by the fixed side walls 2 and 2 and the pivotable side walls 3 and 3, lock members 13, ... each having one tapered face are attached for fixing each of the pivotable side walls 3 and 3 to each of the fixed side walls 2 and 2. Specifically, a lever 12 threadedly engaged with each of the lock members 13 is tightened while the end portions of the fixed side wall 2 and the pivotable side wall 3 are sandwiched by the tapered side faces, fastening the pivotable side walls 3 and 3 to the fixed side walls 2 and 2. Each of the pivotable side walls 3 can be opened or closed with a handle 14 fixed to the pivotable side wall 3.

In the case where to-be-granulated material is granulated, the lever 12 is tightened to fasten the pivotable side walls 3 and 3 to the fixed side walls 2 and 2. When to-be-granulated material is loaded into the loading hopper disposed above the housing and the power of the electric motor is turned on, the rotating shaft 25 rotates at a predetermined number of rotations to rotate the granulating blade 6. The direction of rotation is a direction in which the granulating blade 6 is engaged with the stationary blade 7 downward.

Thus, the to-be-granulated material is granulated into granulated material with a predetermined size by cooperating with each other the granulating blade 6 and the stationary blade 7. The material is delivered toward the lower part of the housing as the granulating blade 6 rotates, and then discharged to a material receiving member.

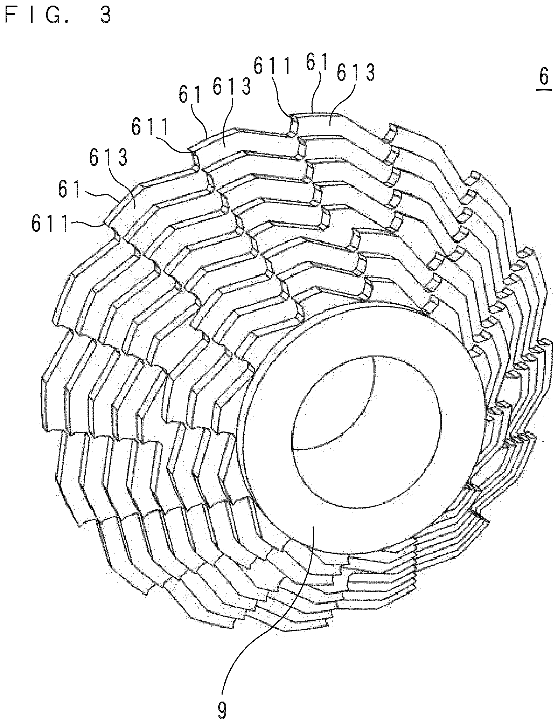

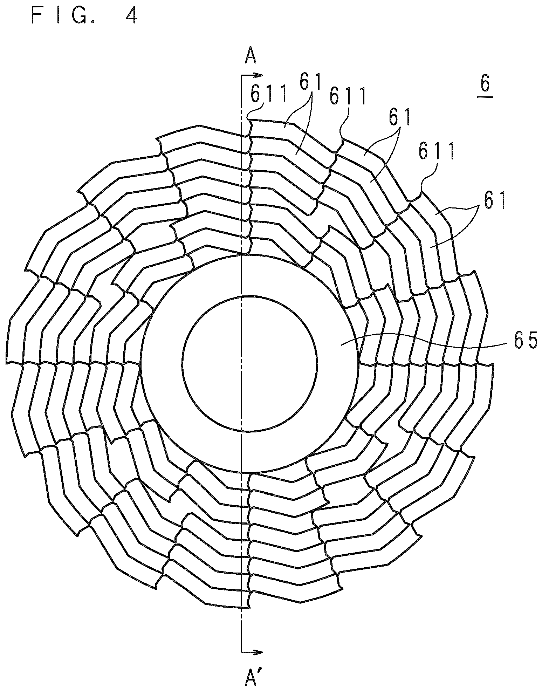

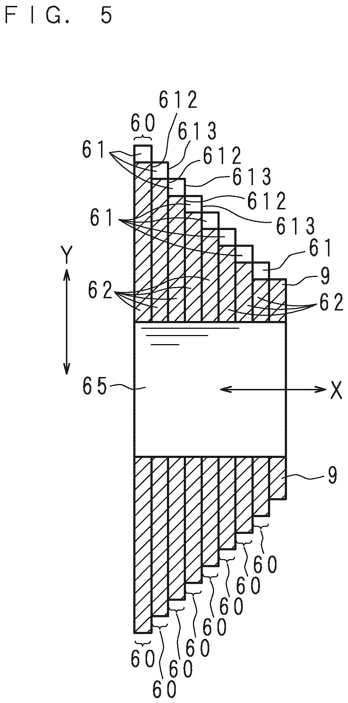

FIG. 3 is an external perspective view illustrating the first example of the configuration of the granulating blade 6 according to the present embodiment, FIG. 4 is an elevation view illustrating the first example of the configuration of the granulating blade 6 according to the present embodiment, and FIG. 5 is a cross-sectional view of the main components taken along line AA' in FIG. 4. As illustrated in FIG. 5, the granulating blade 6 is provided with multiple blade portion groups 60 arranged adjacent to each other along the direction of the rotating shaft (direction represented by the reference code X in the drawing). Though eight blade portion groups 60 are shown in the example in the drawing, the number of blade portion groups is not limited to eight. Each of the multiple blade portion groups 60 is provided with a plurality of blade portions 61 formed about the rotating shaft 25 at the outer periphery of a cylindrical body 62 fit onto the rotating shaft 25.
The multiple blade portions 61 may also be referred to as an array of blades. Each of the blade portions 61 is formed with a cutting edge 611 at the leading edge portion about the rotating shaft (see FIG. 3 or FIG. 4). In other words, the blade portion groups 60, i.e., multiple blade portions 61 (arrays of blades) are arranged adjacent to each other along the direction of the rotating shaft, so that there are no grooves between the arrays of blades (see FIG. 5).

In FIG. 5, the blade portion 61 of the second leftmost blade portion group 60 has a smaller radial dimension from the center of the rotating shaft (the direction represented by the reference code Y in the drawing) than the blade portion 61 of the leftmost blade portion group 60 by a height dimension (dimension in the Y direction) of the blade portion 61. Furthermore, the blade portion 61 of the third leftmost blade portion group 60 has a smaller radial dimension from the center of the rotating shaft than the blade portion 61 of the second leftmost blade portion group 60 by a height dimension of the blade portion 61. Likely, the blade portion 61 of the eighth leftmost (i.e., the rightmost) blade portion group 60 has a smaller radial dimension from the center of the rotating shaft than the blade portion 61 of the seventh leftmost blade portion group 60 by a height dimension of the blade portion 61. Moreover, the radial dimension of the spacer 9 from the center of the rotating shaft is made smaller by a height dimension of the blade portion 61 of the eighth leftmost (i.e., the rightmost) blade portion group 60.

In the granulating blade 6 according to the present embodiment, the radial dimension of the multiple blade portions 61 from the center of the rotating shaft decreases in a stepwise manner for each of the multiple blade portion groups 60 along the direction of the rotating shaft. That is, the radial dimension of the array of blades from the center of the rotating shaft decreases in a stepwise manner along a direction of the rotating shaft from one end toward the other end. Alternatively, it can be said that the radial dimension of the array of blades from the center of the rotating shaft increases in a stepwise manner along a direction of the rotating shaft from the other end toward the one end.

From another viewpoint, one side end portion 612 of the blade portion 61 of the second leftmost blade portion group 60 is in contact with the cylindrical body 62 of the leftmost blade portion group 60, for example. Furthermore, the other side end portion 613 of the blade portion 61 of the second leftmost blade portion group 60 is exposed as a result that the radial dimension from the center of the rotating shaft of the blade portion 61 of the third leftmost blade portion group 60 decreases by the height dimension of the blade portion 61. The exposure of the side end portion 613 here means that the surface of the side end portion 613 is in contact with nowhere and is not covered.

In addition, one side end portion 612 of the blade portion 61 of the third leftmost blade portion group 60 is in contact with the cylindrical body 62 of the second leftmost blade portion group 60 while the other side end portion 613 of the blade portion 61 of the third leftmost blade portion group 60 is exposed. Likely, one side end portion 612 of the blade portion 61 of the eighth leftmost blade portion group 60 is in contact with the cylindrical body 62 of the seventh leftmost blade portion group 60 while the other side end portion 613 of the blade portion 61 of the eighth leftmost blade portion group 60 is exposed.

Hence, in the granulating blade 6 according to the present embodiment, the one side end portions 612, along the direction of the rotating shaft, of the multiple blade portions 61 forming one blade portion group 60 are in contact with the cylindrical body 62 of another blade portion group 60 adjacent to the one blade portion group 60. The other side end portions 613, along the direction of the rotating shaft, of the multiple blade portions 61 forming the one blade portion group 60 are exposed. In other words, one side end portions 612 of the array of blades are in contact with the adjacent cylindrical body 62 formed with the array of blades while the other side end portions 613 (i.e., the side end portion on the side on which the radial dimension of the array of blades decreases in a stepwise manner along the direction of the rotating shaft) are exposed.

Next, granulation of to-be-granulated material by the granulating blade 6 of the granulator 50 according to the present embodiment will be described.

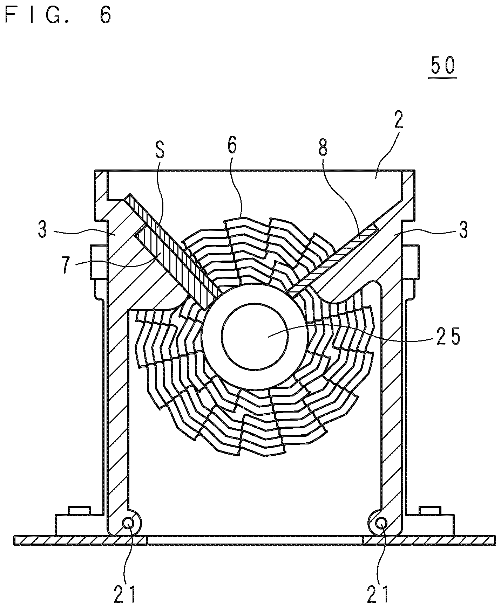

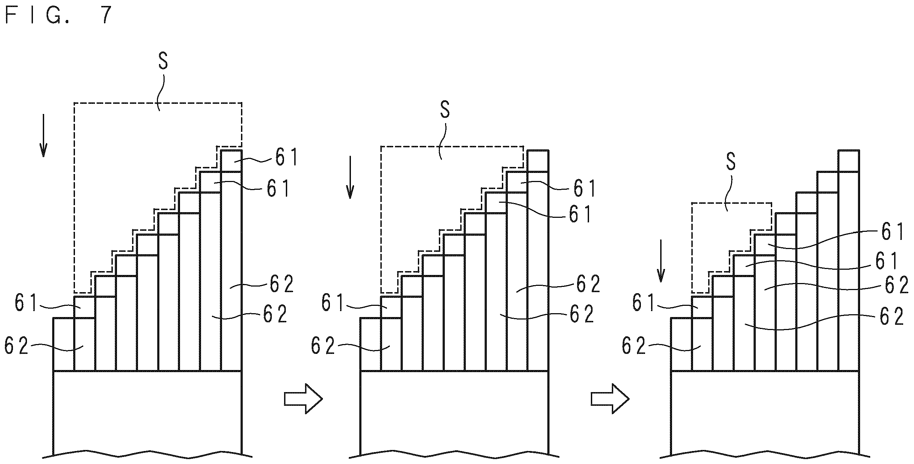

FIG. 6 is a schematic view illustrating one example of a state in which to-be-granulated material S is caught between the granulating blade 6 and the stationary blade 7 according to the present embodiment while FIG. 7 is a schematic view illustrating one example of a state in which the to-be-granulated material S is being granulated by the granulating blade 6 according to the present embodiment. Note that, though to-be-granulated material actually includes material with varying shapes such as a sprue runner, defective molding, etc., FIG. 6 and FIG. 7 illustrate a state in which the to-be-granulated material S having a plate shape is being granulated for convenience. FIG. 6 shows a state in which the to-be-granulated material S loaded from the loading hopper (not illustrated) moves toward the stationary blade 7 as the granulating blade 6 rotates and is being granulated by cooperating with each other the granulating blade 6 and the stationary blade 7.

FIG. 7 shows a case where the drawing in FIG. 6 is viewed facing the stationary blade 7. In the drawing on the left side of FIG. 7, the to-be-granulated material S is granulated by the respective cutting edges 611 of the multiple blade portions 61 (array of blades) of each of the blade portion groups 60. When the lower part of the to-be-granulated material S is granulated by the granulating blade 6, the material S can move (fall) in the direction of the arrow along the side end portion of each of the blade portions 61 since one side end portion of each of the blade portions 61 is exposed (opened), so that the material S moves downward to the granulating blade 6 as shown in the drawing in the middle of FIG. 7.

Moreover, when the granulating blade 6 is rotated to granulate the lower part of the to-be-granulated material S by the granulating blade 6, the material S can move in the direction of the arrow along the side end portion of each of the blade portions 61 since one side end portion of each of the blade portions 61 is exposed, so that the material S moves downward to the granulating blade 6 as shown in the drawing on the right of FIG. 7. Finally, the to-be-granulated material S is granulated into a predetermined size (particle size), and the granulated material drops below the granulator 50.

As described above, the radial dimension of each of the blade portions 61 (array of blades) decreases in a stepwise manner along the direction of the rotating shaft, which facilitates the movement of material-to-be granulated toward the blade portion 61. The movement of the material-to-be granulated can further granulate the material. The blade portion groups 60 are provided instead of the cylindrical grooves between the arrays of blades, which can prevent a part of the material-to-be granulated from staying in the grooves, resulting in improvement of a granulating capability. Additionally, this can also prevent generation of powder due to rubbing of the staying material-to-be granulated, resulting in uniform particle size of the granulated material.

Moreover, one side end portions of respective blade portions 61 (arrays of blades) are exposed to allow material-to-be granulated to move (fall) along the side end portions of the blade portions 61. Then, granulated material granulated by cooperating with each other the granulating blade 6 and the stationary blade 7 can freely drop away from the blade portions 61 (arrays of blades) and can be collected in a predetermined collection box, etc. Thus, a scraper needs not be provided in the present embodiment unlike the conventional granulator which is provided with a plate-shaped scraper for scraping the granulated material granulated into a predetermined size (particle size) by the granulating blade and discharging the scraped material to a material receiving member below the housing.

Next, the comparative example will be described.

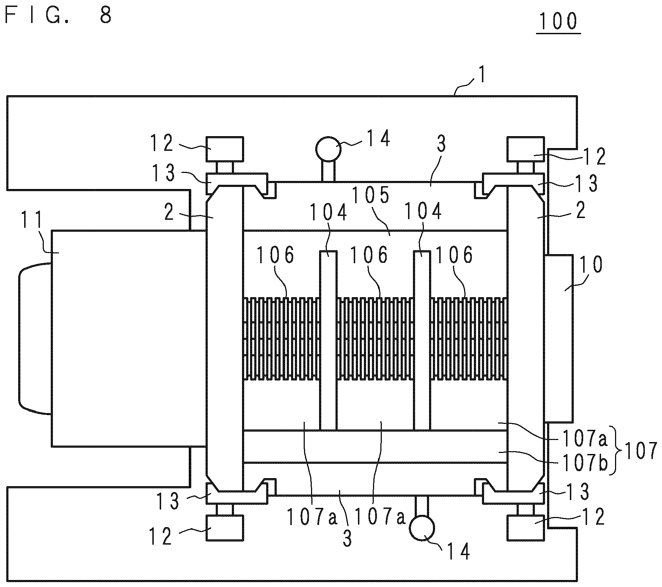

FIG. 8 is a plan view illustrating one example of the configuration of the main components of a granulator 100 as a comparative example. As illustrated in FIG. 8, the granulator 100 as a comparative example accommodates crushing blades 104 and 104 as large rotary blades and granulating blades 106, 106 and 106 as small rotary blades that are fit onto a rotating shaft inside the space (granulation chamber) defined by the fixed side walls 2 and 2 and the pivotable side walls 3 and 3. The crushing blades 104 and 104 arcuately project from the outer circumferential surface of the rotating shaft. In other words, the crushing blades 104 and 104 each have a curved arm shape at the leading edge portion (cutting edge portion) in the direction of rotation and disposed at suitable intervals about the rotating shaft. Each granulating blade 106, 106 or 106 is disposed between the fixed side wall 2 and the crushing blade 104 or between the crushing blades 104 and 104, and has annular grooves at predetermined intervals in the direction of the rotating shaft to form a serrated outer circumferential surface by the annular projections between the adjacent annular grooves.

Inside the one of the pivotable side walls 3, a stationary blade 107 composed of a first stationary blade 107a, ... and a second stationary blade 107b each having a rectangular plate shape is fastened so as to be inclined downwardly toward the inside for granulating a sprue runner by cooperating with each of the crushing blades 104 and each of the granulating blades 106.

The first stationary blades 107a has a dimension in the longitudinal direction substantially the same as the axial dimension of the granulating blade 106, has a teeth portion formed in a serrated shape at the edge portion along one of the long sides so as to be engaged with the cutting edge of the granulating blade 106, and is fastened to the inside of the pivotable side wall 3 by bolts (not illustrated). Furthermore, each of the first stationary blades 107a has a teeth portion for granulating a sprue runner by cooperating with the crushing blade 104 at the edge portion near the crushing blade 104 along the short side.

The second stationary blade 107b has a dimension in the longitudinal direction substantially the same as the axial dimension of the pivotable side wall 3 and has a teeth portion for granulating a sprue runner by cooperating with the crushing blade 104 at the part near the crushing blade 104 of the edge portion along one of the long sides. The second stationary blade 107b is fastened to the inside of the pivotable side walls 3 by bolts (not illustrated) so as to be in contact with the other edge portions of the first stationary blades 107a ...along the long side.

A rectangular plate-shaped scraper 105 is fastened to the inside of the other one of the pivotable side walls 3 so as to be inclined downwardly toward the inside by bolts (not illustrated) for scraping the granulated material having been granulated into a predetermined size (particle size) by the granulating blade 106 and discharging the scraped material to a material receiving member (not illustrated) below the housing.

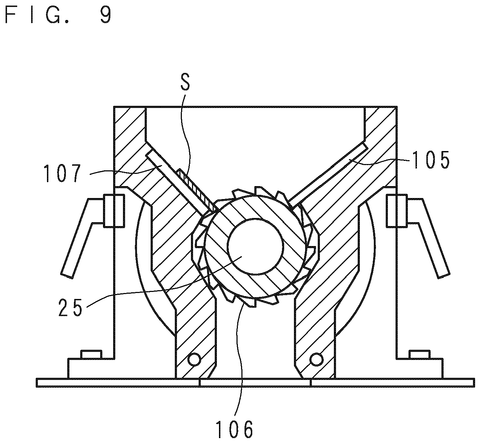

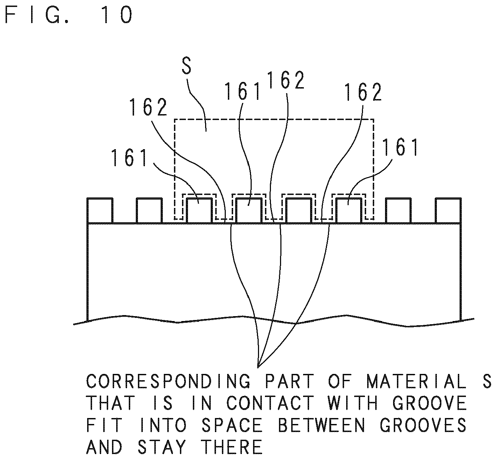

FIG. 9 is a schematic view illustrating one example of a state in which to-be-granulated material S is caught between a granulating blade 106 and a stationary blade 107 as a comparative example while FIG. 10 is a schematic view illustrating one example of a state in which the to-be-granulated material S is being granulated by the granulating blade 106 as a comparative example. Note that though the material-to-be granulated actually includes material with varying shapes such as a sprue runner, defective molding, etc., FIG. 9 and FIG. 10 illustrate a state in which to-be-granulated material S having a plate shape is being granulated for convenience. FIG. 9 shows a state in which the to-be-granulated material S loaded from the loading hopper (not illustrated) moves toward the stationary blade 107 as the granulating blade 106 rotates and is being granulated by cooperating with each other the granulating blade 106 and the stationary blade 107.

FIG. 10 shows a case where the drawing in FIG. 9 is viewed facing the stationary blade 107. The granulating blade 106 as a comparative example is formed with multiple blade portions 161 (array of blades) spaced at suitable intervals at the outer periphery of the cylindrical body. That is, there are grooves 162 between the adjacent arrays of blades. As illustrated in FIG. 10, when to-be-granulated material S is loaded, a corresponding part of the material S that is in contact with the blade portion 161 is granulated by the granulating blade 106 while a corresponding part of the material S that is in contact with the groove 162 is not granulated, and a part of the to-be-granulated material S may be fit into the space between the grooves 162 and stay there. If the granulating blade 106 is rotated in this state, the to-be-granulated material S and the groove 162 rub against each other to generate powder. In the granulator 100 of the comparative example, the particle size of the granulated material may vary.

According to the present embodiment, however, the radial dimension of each blade portion 61 (array of blades) decreases in a stepwise manner toward the direction of the rotating shaft as described above, which facilitates the movement of material-to-be granulated toward the blade portion 61. The movement of the material-to-be granulated can further granulate the material. There are no grooves between the arrays of blades, which can prevent a part of the material-to-be granulated from staying in the grooves. This can prevent generation of powder due to rubbing of the staying material-to-be granulated, resulting in uniform particle size of the granulated material.

In the present embodiment, a cutting surface may be formed on the other side end portion 613 of each of the multiple blade portions 61. That is, as illustrated in FIG. 5, a cutting surface can be formed on the exposed side end portion 613 of the array of blades. This enables granulation of material-to-be granulated by the cutting surface of the side end portion 613 as well, resulting in enhancement of a granulating capability.

Furthermore, as illustrated in FIG. 1, multiple (three in the example of FIG. 1) granulating blades 6 are arranged so as to be spaced at suitable intervals along the direction of the rotating shaft. This can increase the processing amount of the material-to-be granulated.

In addition, as illustrated in FIG. 1, the stationary blade 7 has stationary cutting surfaces 71 that are engaged with the granulating blades 6, and the stationary cutting surfaces 71 are formed in a stepwise manner so as to conform to the leading edge portions of the respective blade portions 61 (array of blades) of each of the multiple blade portion groups 60. This makes it possible to prevent material-to-be granulated from staying and prevent generation of powder due to rubbing of the staying material-to-be granulated when the granulating blade 6 and the stationary blade 7 cooperate with each other to granulate material-to-be granulated, which uniformizes the particle size of the granulated material.

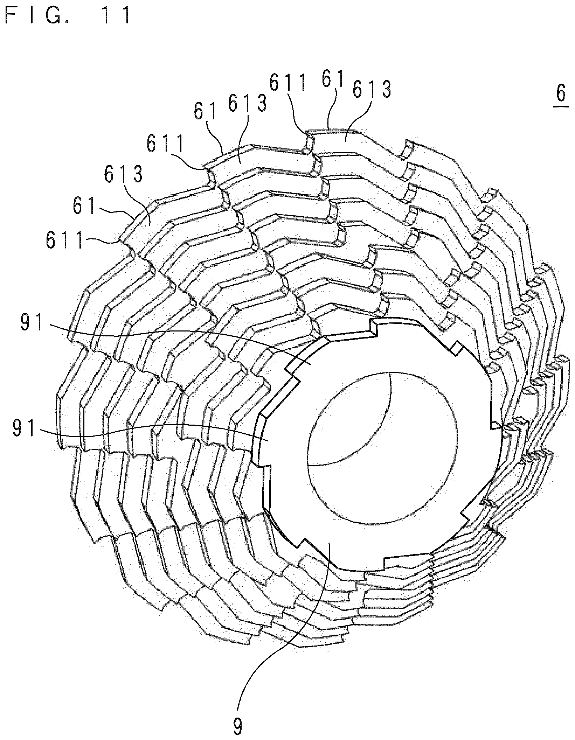

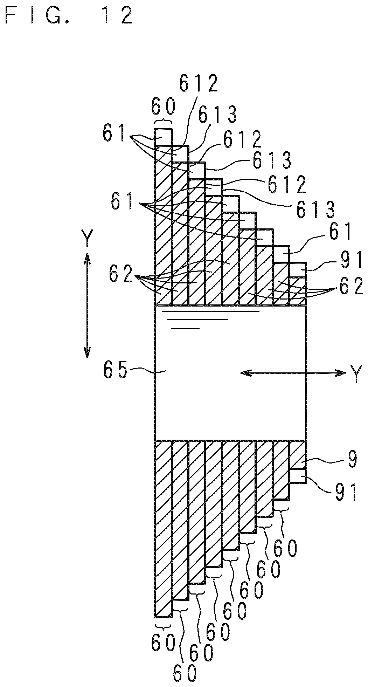

FIG. 11 is an external perspective view illustrating a second example of the configuration of the granulating blade 6 according to the present embodiment while FIG. 12 is a vertical cross-sectional view illustrating the second example of the configuration of the main components of the granulating blade 6 according to the present embodiment. The difference from the first example illustrated in FIGs. 3 to 5 is that multiple blade portions 91 (array of blades) are provided at the outer periphery of a cylindrical spacer 9. The shape of the blade portion 91 may be similar to or different from that of the blade portion 61. As illustrated in FIG. 12, the radial dimension of the blade portion 91 of the spacer 9 from the center of the rotating shaft is made smaller by a height dimension of the blade portion 61 of the eighth leftmost (i.e., the rightmost) blade portion group 60.

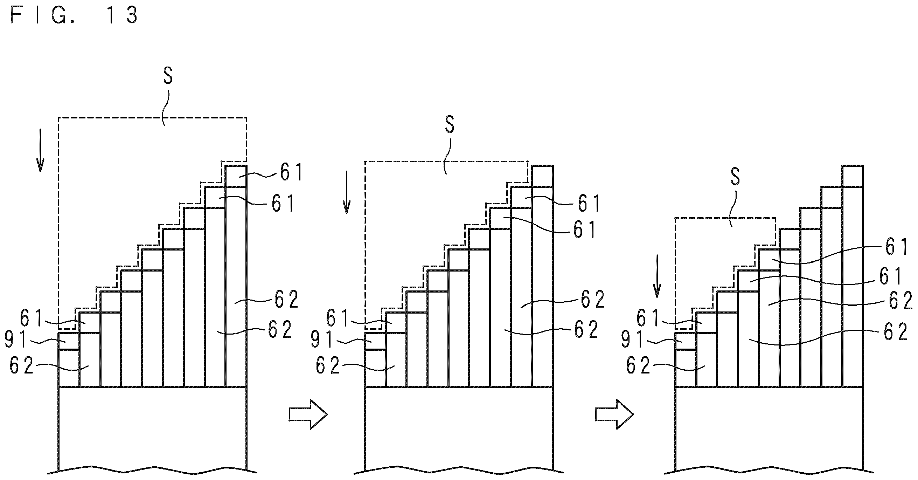

FIG. 13 is a schematic view illustrating one example of a state in which to-be-granulated material S is being granulated by the granulating blade 6 according to the present embodiment. FIG. 13 illustrates a state in which to-be-granulated material S having a plate shape is being granulated for convenience. In the drawing on the left of FIG. 13, the blade portion 91 of the spacer 9 and the respective cutting edges 611 of the multiple blade portions 61 (row of blades) forming each of the blade portion groups 60 granulate the to-be-granulated material S. When the lower part of the to-be-granulated material S is granulated by the granulating blade 6, the material S can move (fall) in the direction of the arrow along the side end portion of each blade portion 61 since one side end portion of each of the blade portions 61 is exposed (opened), so that the material S moves downward to the granulating blade 6 as shown in the drawing in the middle of FIG. 13.

Moreover, when the granulating blade 6 is rotated to granulate the lower part of the to-be-granulated material S by the granulating blade 6, the to-be-granulated material S can move in the direction of the arrow along the side end portion of each of the blade portions 61 since one side end portion of each of the blade portions 61 is exposed. Thus, the to-be-granulated material S moves downward to the granulating blade 6 as shown in the drawing on the right of FIG. 13. Finally, the to-be-granulated material S is granulated into a predetermined size (particle size) and drops below the granulator 50.

As described above, the radial dimension of each of the blade portions 61 (array of blades) decreases in a stepwise manner along the direction of the rotating shaft, which facilitates the movement of material-to-be granulated toward the blade portions 61. The movement of the material-to-be granulated can further granulate the material. Moreover, there are no grooves between the array of blades, which can prevent a part of the material-to-be granulated from staying in the grooves and thus improve a granulating capability. Additionally, this can also prevent generation of powder due to rubbing of the staying material-to-be granulated, resulting in uniform particle size of the granulated material.

Next, the structure of the fixed side wall 2 will be described.

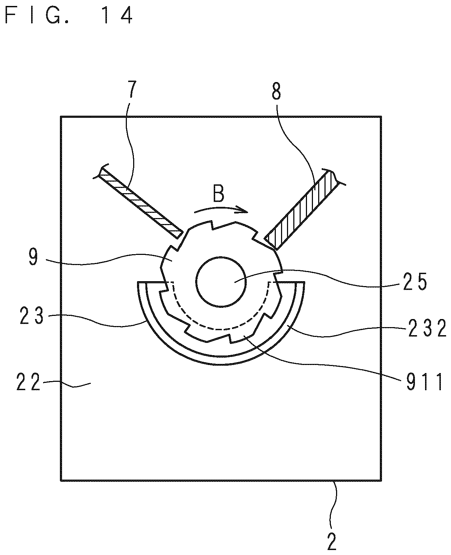

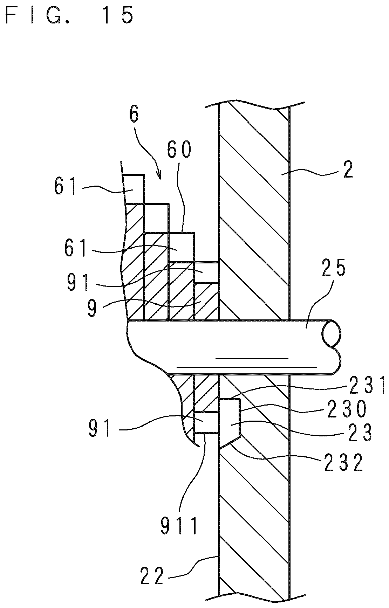

FIG. 14 is a schematic view illustrating one example of the configuration of an inside wall 22 of the fixed side wall 2 according to the present embodiment while FIG. 15 is a vertical cross-sectional view illustrating the main components of the fixed side wall 2 according to the present embodiment. In FIG. 14, the rotating shaft 25, the spacer 9 of the granulating blade 6, the stationary blade 7 and the fall prevention plate 8 are illustrated for clarifying the positional relationship. FIG. 14 is a drawing when the fixed side wall 2 is viewed from the granulating blade 6 side, which shows the inside wall 22 of the fixed side wall 2. On the inside wall 22 of the fixed side wall 2, a slot 23 having a shape of a part of an arc of a circle is provided. That is, the slot 23 can be in the form of a semi-circular arc. In the example of FIG. 14, the slot 23 has a shape of a semi-circular arc, and a line segment extending from the center of the rotating shaft 25 to one end of the slot 23 and a line segment extending from the center of the rotating shaft 25 to the other end of the slot 23 meet at the center of the rotating shaft 25 to form an angle of 180 degrees. The angle formed by the two line segments is not limited thereto, and the angle may be, for example, 190 degrees, 200 degrees or 210 degrees or the like.

As illustrated in FIG. 15, the inside wall 22 is an opposing wall of the housing that faces the end portion of the granulating blade 6 having the smallest radial dimension from the center of the rotating shaft 25. The end portion, here, can be the cylindrical spacer 9 if the spacer 9 is disposed between the blade portion group 60 having the smallest radial dimension and the fixed side wall 2 (housing) as illustrated in FIG. 15. Note that though the blade portion 91 is provided at the outer periphery of the spacer 9 in the example of FIG. 15, the blade portion 91 is not necessarily provided.

The slot 23 having a shape of a semi-circular arc is provided along the outer periphery of the end portion of the granulating blade 6, that is, along the path of the movement through which the blade portion 91 moves by the rotation of the granulating blade 6. As illustrated in FIG. 15, the slot 23 is defined by a bottom surface 230, an inner side surface 231 extending from the bottom surface 230 along the direction of the rotating shaft 25 and an outer side surface 232. The inner side surface 231 is closer to the rotating shaft 25 than the outer side surface 232. That is, the outer side surface 232 corresponds to the lower surface of the slot 23. Furthermore, the slot 23 is provided such that an outer periphery portion 911 of the blade portion 91 is positioned between the inner side surface 231 and the outer side surface 232. In other words, a space (clearance) is formed between the blade portion 91 and the inside wall 22 of the fixed side wall 2 by the slot 23.

As described above, the semi-circular slot 23 is provided along the outer periphery (blade portion 91) of the end portion (spacer 9), so that even if granulated material is caught between the end portion and the inside wall 22 (opposing wall), the material can easily move through the space formed by the slot 23, which enables removal of the granulated material.

Moreover, as illustrated in FIG. 15, the outer side surface 232 is inclined so as to increase the width of the slot 23 from the bottom surface 230 toward the opening of the slot 23. This allows the granulated material that has entered the slot 23 to slide downward on the outer side surface 232 and to move more easily, better removing the granulated material.

Though the spacer 9 is configured to be provided with the blade portion 91 in the example of FIG. 15, the spacer 9 may also be configured not to be provided with the blade portion 91. Alternatively, the spacer 9 needs not be provided. In this case, the end portion can be the blade portion group having the smallest radial dimension out of the multiple blade portion groups 60 forming the granulating blade 6.

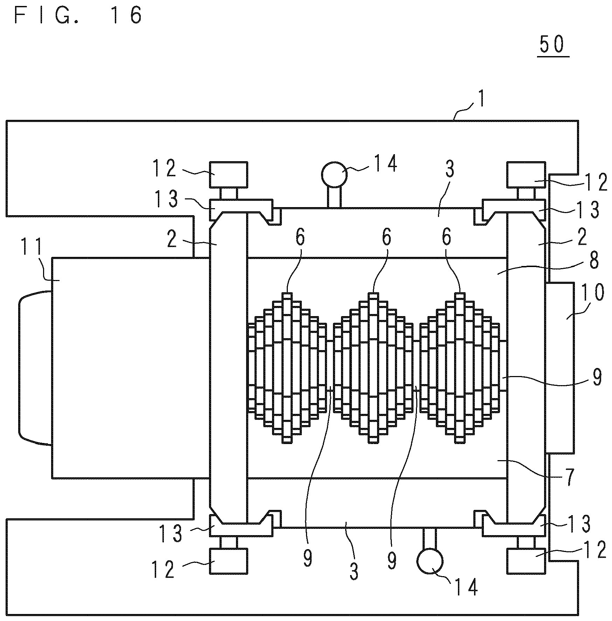

FIG. 16 is a plan view illustrating the second example of the configuration of the main components of the granulator 50 according to the present embodiment. In the first example as described above, though the granulating blade 6 is configured such that the radial dimension from the center of the rotating shaft to the blade portion 61 decreases in a stepwise manner in a direction of the rotating shaft from one end to the other end, the configuration of the granulating blade 6 is not limited thereto. As illustrated in FIG. 16, for example, the granulating blade 6 is configured such that the radial dimension from the center of the rotating shaft to the blade portion 61 decreases in a stepwise manner from the center portion of the granulating blade 6 toward both ends in the direction of the rotating shaft. In other words, the radial dimension from the center of the rotating shaft to the blade portion 61 increases in a stepwise manner from both ends of the granulating blade 6 to the center portion thereof in the direction of the rotating shaft.

In the second example as well, the radial dimension of each of the blade portions 61 (array of blades) decreases in a stepwise manner along the direction of the rotating shaft, which facilitates the movement of material-to-be granulated toward the blade portion 61. The movement of the material-to-be granulated can further granulate the material. The blade portion groups 60 are provided instead of the cylindrical grooves between the arrays of blades, which can prevent a part of the material-to-be granulated from staying in the grooves and can improve a granulating capability. Additionally, this can prevent generation of powder due to rubbing of the staying material-to-be granulated, resulting in uniform particle size of the granulated material.

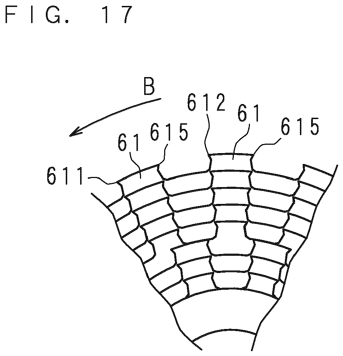

FIG. 17 is a schematic view illustrating another example of the shape of each of the blade portions 61 of the granulating blade 6. As illustrated in FIG. 17, each of the multiple blade portions 61 can be formed with a cutting edge 615 at the trailing edge portion as well as the cutting edge 611 at the leading edge portion about the direction of the rotating shaft (in the direction represented by the reference code B in the drawing). The cutting edge 615 is thus formed at the trailing edge portion as well as the leading edge portion of the array of blades, so that material-to-be granulated can be granulated by not only rotating the granulating blade 6 in the direction represented by the reference code B but also reversely rotating the granulating blade 6. It is noted that, in this case, the stationary blade 7 may be attached instead of the fall prevention plate 8. This enables the granulating blade 6 to reversely rotate, resulting in extension of the life of the granulating blade 6. In addition, the reverse rotation of the granulating blade 6 can further prevent material-to-be granulated from staying.

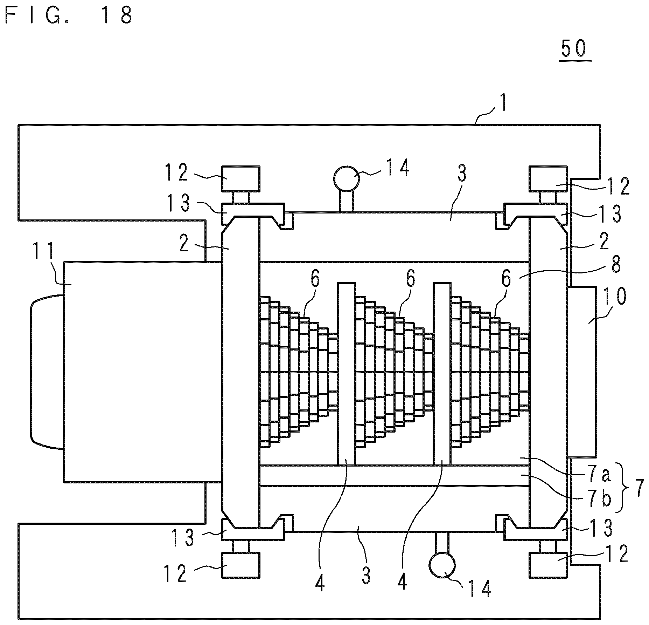

FIG. 18 is a plan view illustrating a third example of the configuration of the main components of the granulator 50 according to the present embodiment. The difference from the first example described above is that a crushing blade 4 is provided between the adjacent granulating blades 6. The crushing blade 4 (also referred to as a large rotary blade) has a curved arm shape at the leading edge portion about the direction of rotation. In the example of FIG. 18, the granulator 50 is provided with two sheets of crushing blades 4. The provision of the crushing blades 4 enables granulation of a sprue runner of a large shape. It is noted that the crushing blade 4 is not necessarily provided. The crushing blade 4 may be attached as necessary depending on the type of material-to-be granulated as an object. Note that the amount of material-to-be granulated that is to be loaded in the granulation chamber needs to be limited so as not to exceed a predetermined amount if the crushing blade 4 is attached.

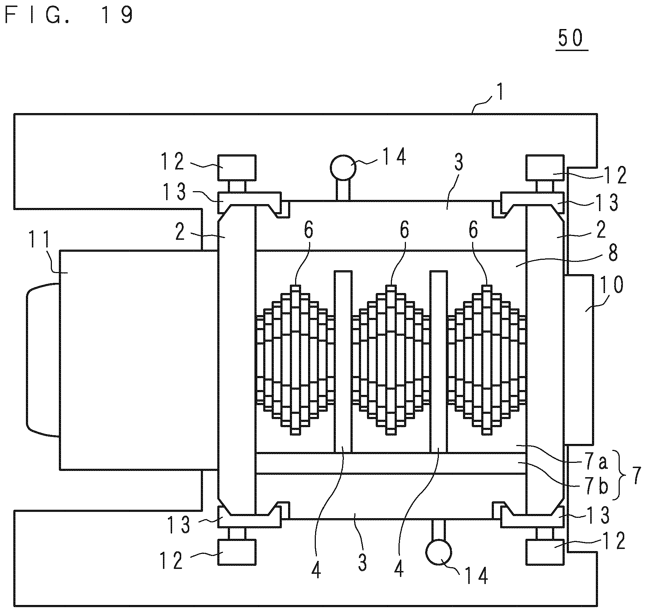

FIG. 19 is a plan view illustrating a fourth example of the configuration of the main components of the granulator 50 according to the present embodiment. The difference from the second example described above is that the crushing blade 4 is provided between the adjacent granulating blades 6 similarly to the third example. The crushing blade 4 has a curved arm shape at the leading edge portion about the direction of rotation. In the example of FIG. 19, the granulator 50 is provided with two sheets of crushing blades 4. The provision of the crushing blades 4 enables granulation of a sprue runner of a large shape. It is noted that the crushing blade 4 is not necessarily provided. The crushing blade 4 may be attached as necessary depending on the type of material-to-be granulated as an object while the amount of material-to-be granulated that is to be loaded in the granulation chamber is limited.

As described above, according to the present embodiment, material-to-be granulated does not stay on the granulating blade by being fit into the groove, for example, which can prevent generation of powder due to rubbing of the material-to-be granulated against a surface such as a groove or the like and can uniformize the particle size of the granulated material.

Furthermore, one side end portion of the blade portion can be exposed and can be formed with a cutting surface, which enables granulation of material-to-be granulated by the side end portion of the blade portion as well as the leading edge portion thereof, resulting in enhanced granulating capability. As illustrated in FIGs. 1 and 16, the combination among the arrays of blades can be changed, so that various modes of material-to-be granulated such as a type, a shape or the like (for example, a block-shaped mass such as defective molding) can be granulated.

Moreover, in the granulator 50 according to the present embodiment, material-to-be granulated does not stay, so that material-to-be granulated that stays at the crushing blade (large rotary blade) needs not be crushed as in the conventional granulator, which eliminates the need for the crushing blade as a result. This eliminates the need for a large cutting-off torque required for granulation by the large rotary blade of a bulky shape, which enables miniaturization of the granulator. This also eliminates the need for a half-circular arc shaped cover below the rotating shaft for fear that relatively large granulated material crushed by the large rotary blade is collected. This can consequently reduce the weight and the size of the granulator and can also reduce the cost thereof. Since a large cutting-off torque is unnecessary, the volume of the motor is reduced to approximately one third of that of the granulator with a large rotary blade. This only requires a gear reduction torque, not the strength. This further eliminates a large motor, which can reduce power consumption.

Additionally, as illustrated in FIG. 17, the cutting edges 611 and 615 are formed at the leading edge portion and the trailing edge portion of the blade portion 61, respectively. This makes it possible to granulate material-to-be granulated by reversely rotating the granulating blade 6 and extend the life of the granulating blade 6. Moreover, the granulating blade 6 repeats a forward rotation and a backward rotation at appropriate time intervals or frequencies, which can further prevent material-to-be granulated from staying.

In addition, in the case of the conventional configuration provided with a large rotary blade, the large rotary blade is larger in shape than the granulating blade and takes too much material-to-be granulated at a time for the granulation chamber defined by the housing to accommodate. It is thus necessary to wait a certain amount of time every time material-to-be granulated is loaded from the loading hopper so as to limit loading of a preset amount of material-to-be granulated or more. According to the present embodiment, material-to-be granulated does not stay, and a large rotary blade is not attached, which eliminates the need for waiting and achieves a short processing time. Furthermore, it is possible to increase the number of rotations of the granulating blade 6 (further increase the rate from conventional approximately 25-30 rpm, for example) depending on the quantity of the loaded material-to-be granulated.

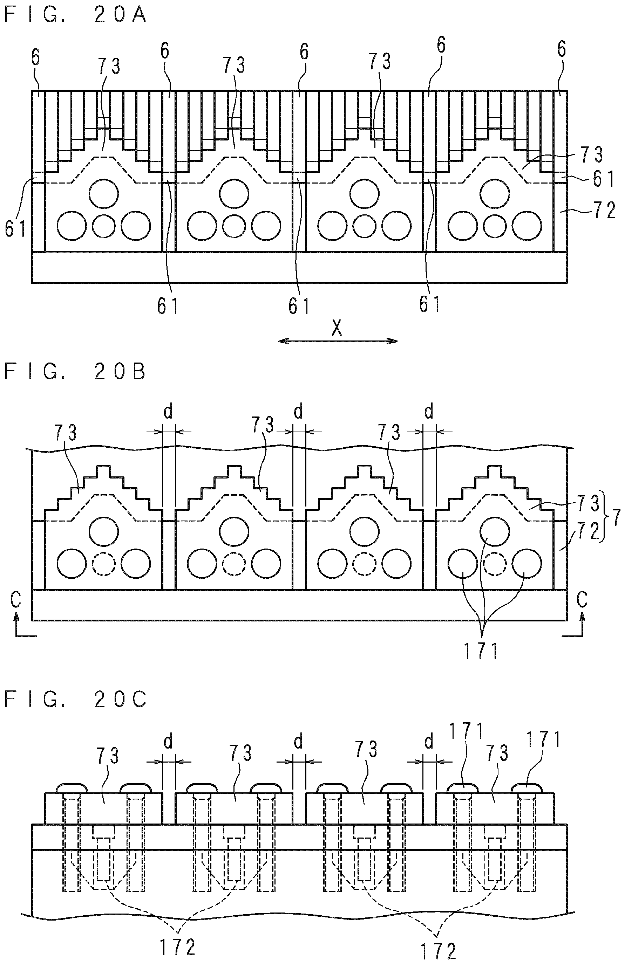

FIG. 20A, FIG. 20B and FIG. 20C illustrate examples of the main components near the stationary blade 7. FIG. 20A is a plan view illustrating an engaged state between the stationary blade 7 and the granulating blade 6. FIG. 20B is a plan view from which the granulating blade 6 is omitted for clarifying the structure of the stationary blade 7. FIG. 20C is an elevation view obtained when FIG. 20B is viewed from the direction represented by the reference code C. The reference code 72 denotes a stationary plate. The stationary plate 72 is an elongated plate extending along the direction of the rotating shaft (direction represented by the reference code X of the drawing) and fastened to the housing by bolts 172. The stationary blade 7 includes the stationary plate 72 and multiple small stationary blades 73. Similarly to the stationary blade 7, the small stationary blades 73 each include a stationary cutting surface to be engaged with the granulating blade 6, and the stationary cutting surface is formed in a stepwise manner so as to conform to the leading edge portions of the multiple blade portions 61 (array of blades) of each of the multiple blade portion groups 60. This makes it possible to prevent material-to-be granulated from staying and prevent generation of powder due to rubbing of the staying material-to-be granulated when the granulating blade 6 and the small stationary blades 73 cooperate with each other to granulate material-to-be granulated, resulting in uniform particle size of the granulated material.

The small stationary blades 73 are fastened to the stationary plate 72 by the bolts 171 so as to be spaced away from each other at suitable intervals (represented by the reference code d). It is noted that each of the small stationary blade 73 is mounted so as to be slightly movable along the direction of the rotating shaft, and can be fastened by the bolt 171 after fine adjustment of the position thereof. The small stationary blades 73 are fastened to the stationary plate 72 so as to be spaced at suitable intervals along the direction of the rotating shaft, so that the small stationary blades 73 can be fastened to the stationary plate 72 by adjusting the intervals between the adjacent small stationary blades 73. In the case where the multiple blade portion groups of the granulating blade 6 are arranged adjacent to each other along the direction of the rotating shaft, even if measuring errors of the blade portion groups are accumulated in the direction of the rotating shaft, the positions of each of the small stationary blades 73 is adjustable to thereby enable appropriate engagement between the granulating blade 6 and the small stationary blades 73. It is noted that a spacer for resizing may be attached between the small stationary blades 73. Furthermore, a member for resizing such as a thickness gage may be attached to a desired position between the adjacent blade portion groups forming the granulating blade 6.

### Embodiment 2

Though in the above-described Embodiment 1, the leading edge portions of the respective blade portions 61 (array of blades) of the multiple blade portion groups 60 are formed in a stepwise manner, the configuration is not limited thereto. Embodiment 2 will be described below.

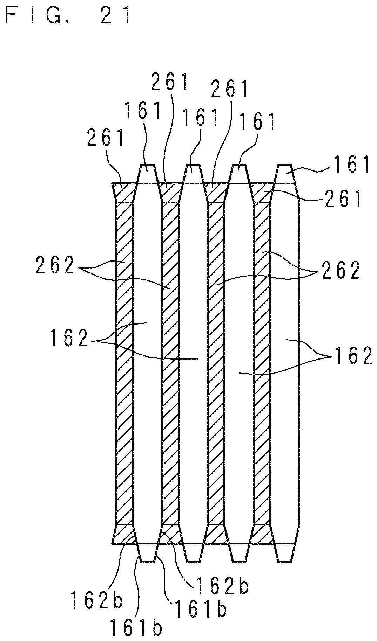

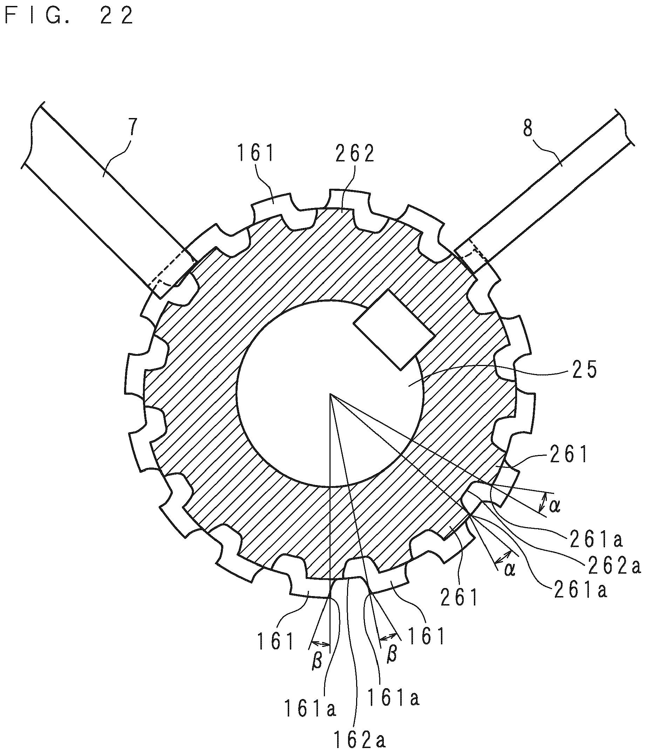

FIG. 21 is a side view illustrating one example of the main components of a granulating blade 6 according to Embodiment 2. FIG. 22 is a side view illustrating one example of the main components near the granulating blade 6 of the granulator according to Embodiment 2. As illustrated in the drawings, the radial dimensions of the multiple blade portions from the center of the rotating shaft are different between the adjacent blade portion groups. Since the radial dimensions of the blade portions (array of blades) are different between the adjacent blade portion groups, material-to-be granulated may easily move toward the blade portions. The movement of the material-to-be granulated can further granulate the material. This can prevent generation of powder due to rubbing of the staying material-to-be granulated, resulting in uniform particle size of the granulated material. The details will be described below.

As illustrated in FIG. 21, a first blade portion group is provided with multiple blade portions 161 formed about the rotating shaft at the outer periphery of a cylindrical body 162 fit onto the rotating shaft 25. Each of the blade portions 161 is formed with a cutting edge at the leading edge portion about the rotating shaft. A second blade portion group is provided with multiple blade portions 261 formed about the rotating shaft at the outer periphery of a cylindrical body 262 fit onto the rotating shaft 25. Each of the blade portions 261 is formed with a cutting edge at the leading edge portion about the rotating shaft. The radial dimension from the center of the rotating shaft of each of the multiple blade portions 161 forming the first blade portion group is larger than the radial dimension from the center of the rotating shaft of each of the multiple blade portions 261 forming the second blade portion group. Furthermore, the first blade portion group and the second blade portion group are arranged adjacent to (closely in contact with) each other along the direction of the rotating shaft, so that there are no grooves between the arrays of blades.

As illustrated in FIG. 22, the dimension, around the axis of the rotating shaft 25, of each of the multiple blade portions 261 forming the second blade portion group decreases radially from the center of the rotating shaft 25. In other words, the angle α formed by a leading edge side surface or a trailing edge side surface of each of the blade portions 261 formed at the outer periphery 262a of the cylindrical body of the second blade portion group and a plane connecting the center of the rotating shaft 25 and the leading edge portion or the trailing edge portion 261a of each of the blade portion 261 is equal to or larger than 0 degrees. Note that, as illustrated in FIG. 22, it may be possible that the angle β formed by a leading edge side surface or a trailing edge side surface of each of the blade portions 161 formed at the outer periphery 162a of the cylindrical body of the first blade portion group and a plane connecting the center of the rotating shaft 25 and the leading edge portion or the trailing edge portion 161a of each of the blade portion 161 may be equal to or larger than 0 degrees.

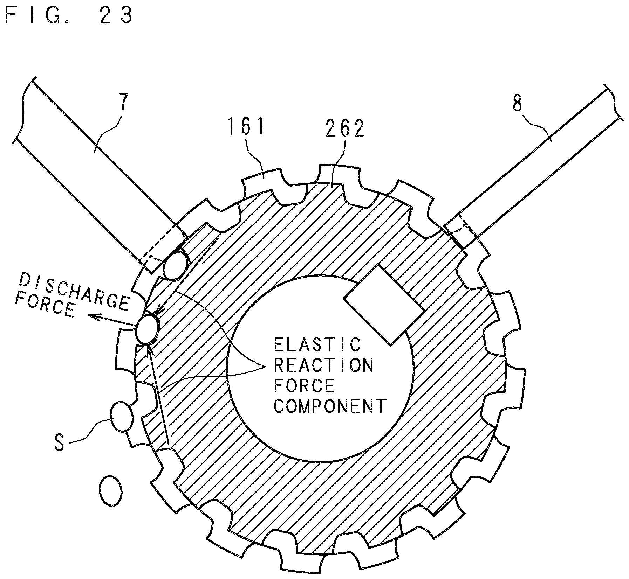

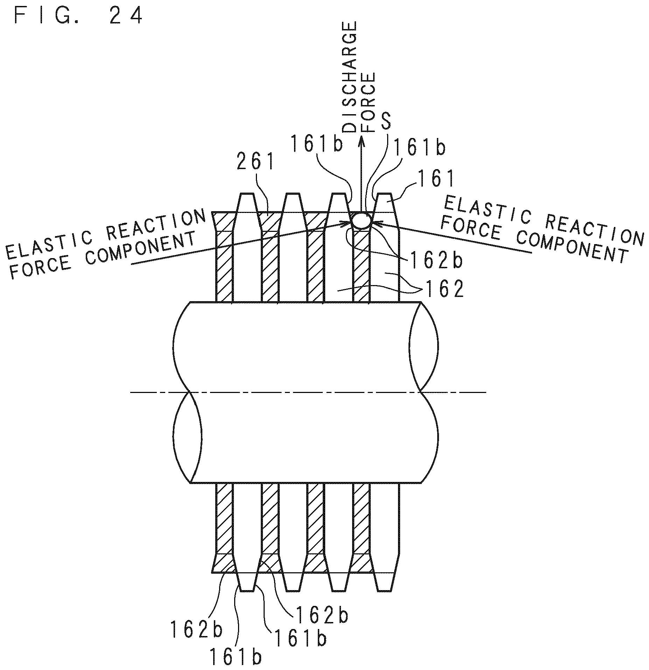

FIGs. 23 and 24 are schematic views illustrating examples of a state in which material-to-be granulated is being discharged. As illustrated in FIG. 23, each of the multiple blade portions 261 forming the second blade portion group has a dimension about the rotating shaft decreasing radially from the center of the rotating shaft. Thus, even if to-be-granulated material (represented by the reference code S) enters the gap between the neighboring blade portions 261 of the second blade portion group, each blade portion 261 exerts an elastic reaction force on the material to thereby discharge the material from the gap. This can prevent generation of powder due to rubbing of the staying material-to-be granulated, resulting in uniform particle size of the granulated material.

Furthermore, as illustrated in FIG. 24, the first blade portion group has a large radial dimension of each of the multiple blade portions 161 from the center of the rotating shaft while the second blade portion group has a smaller radial dimension of each of the multiple blade portions 261 from the center of the rotating shaft than that of the first blade portion group. The cylinders 162 of two first blade portion groups adjacent to the second blade portion group face with each other across the gap between the two neighboring blade portions 261 forming the second blade portion group. The dimension (width dimension) of each of the cylinders 162 in the direction of the rotating shaft decreases from the center of the rotating shaft radially.

According to the above-described configuration, even if material-to-be granulated enters the gap between the neighboring blade portions 261 forming the second blade portion group, each of the cylindrical bodies 162 has a tapered surface 162b (is tapered) so as to radially decrease in its width direction to thereby exert an elastic reaction force on the to-be-granulated material (represented by the reference code S) from the cylindrical body 162, resulting in discharge of the material-to-be granulated from the gap. This can prevent generation of powder due to rubbing of the staying material-to-be granulated, resulting in uniform particle size of the granulated material. Note that, as illustrated in FIG. 24, the dimension (width dimension) of each of the blade portions 161 forming the first blade portion group in the direction of the rotating shaft may decrease from the center of the rotating shaft radially. Here, the tapered surface 162b of the cylindrical body 162 and a tapered surface 161b of the blade portion 161 may be made flush with each other. This makes it possible to discharge material-to-be granulated more easily.

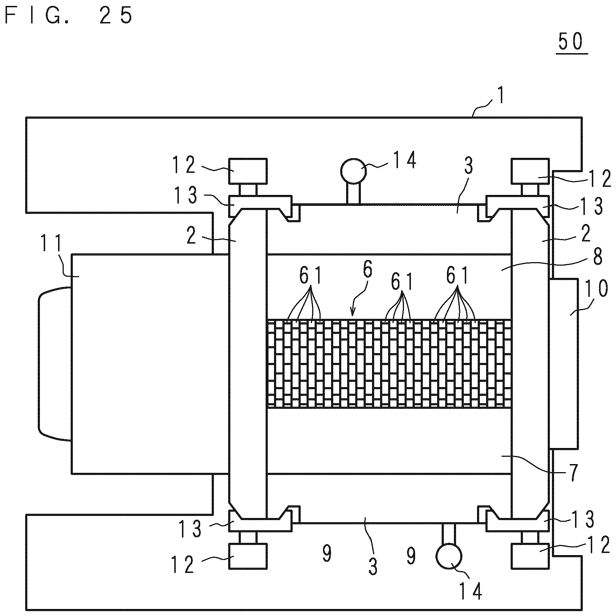

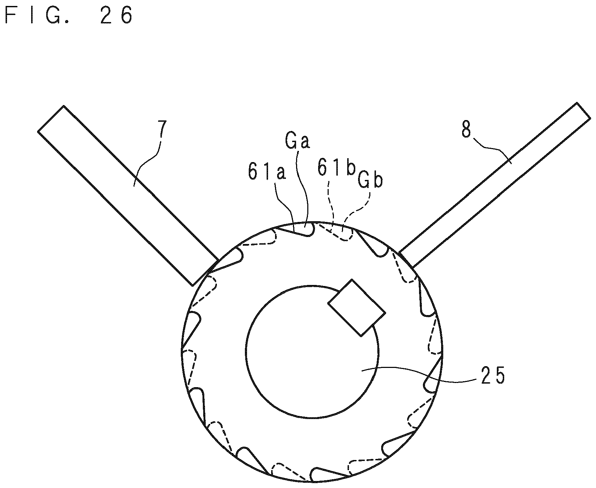

FIG. 25 is a plan view illustrating another example of the configuration of the main components of the granulator 50 according to Embodiment 2 while FIG. 26 is a side view illustrating another first example of the configuration of the main components of the granulator 50 according to Embodiment 2. As illustrated in the drawings, each of the multiple blades 61 is formed with a cutting edge at the leading edge portion about the rotating shaft 25, and the radial dimension of each of the multiple blade portions 61 from the center of the rotating shaft 25 of is equal for the adjacent blade portion groups (the first blade portion group and the second blade portion group). This can uniformize the blade portion groups, which can make the cutting edge of the blade of the stationary blade 7 linear, resulting in a simple shape of the stationary blade 7.

As illustrated in FIG. 26, the respective blade portions 61b of the two first blade groups (the blade portion group on the far side, for example) adjacent to the second blade portion group are arranged to face with each other across the gap Ga between the neighboring blade portions 61a of the second blade portion group (the blade portion group on the near side, for example). Thus, the gaps Ga between the neighboring blade portions 61a of the second blade portion group and the gaps Gb between the neighboring blade portions 61b of the first blade portion group are not overlaid with each other in the direction of the rotating shaft 25. This can prevent generation of powder due to rubbing of the staying material-to-be granulated, resulting in uniform particle size of the granulated material.

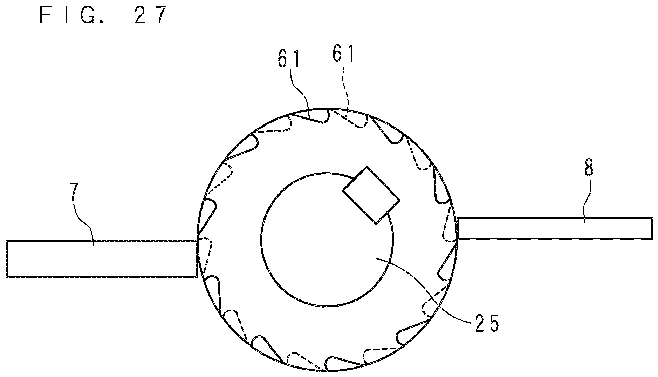

FIG. 27 is a side view illustrating another second example of the configuration of the main components of the granulator 50 according to Embodiment 2. The difference from FIG. 26 is that the stationary blade 7 and the fall prevention plate 8 are disposed to be substantially flush with each other. That is, the angle formed by the top surface of the stationary blade 7 and the top surface of the fall prevention plate 8 may be substantially 180 degrees as illustrated in FIG. 27, may be substantially 90 degrees as illustrated in FIG. 26, or may be set to an appropriate angle in the range of substantially 90 degrees to substantially 180 degrees depending on the types of the material-to-be granulated.

In the above-described embodiment, in the case where the granulator is not provided with a crushing blade 4, material-to-be granulated can be pushed toward the granulating blade by a pusher to thereby improve the processing capability (for example, the granulated amount and the granulating time) thereof. The detailed example of the pusher will be described below.

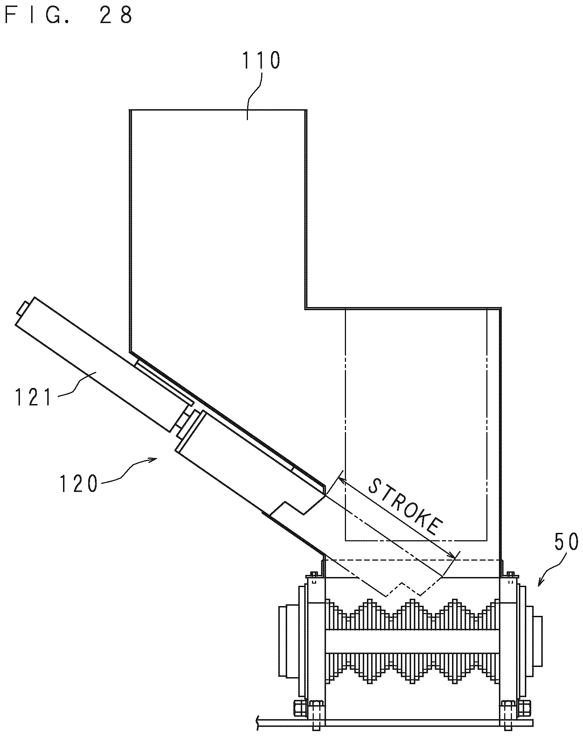

FIG. 28 is a side view illustrating one example of an oblique pusher 120. In FIG. 28, a granulating blade is visibly illustrated for convenience. When material-to-be granulated that is loaded from a loading hopper 110 fall toward the granulating blade of a granulator 50, a push-in portion 121 obliquely moves forward and backward in a predetermined stroke by a guided air cylinder to thereby push the material-to-be granulated toward the granulating blade.

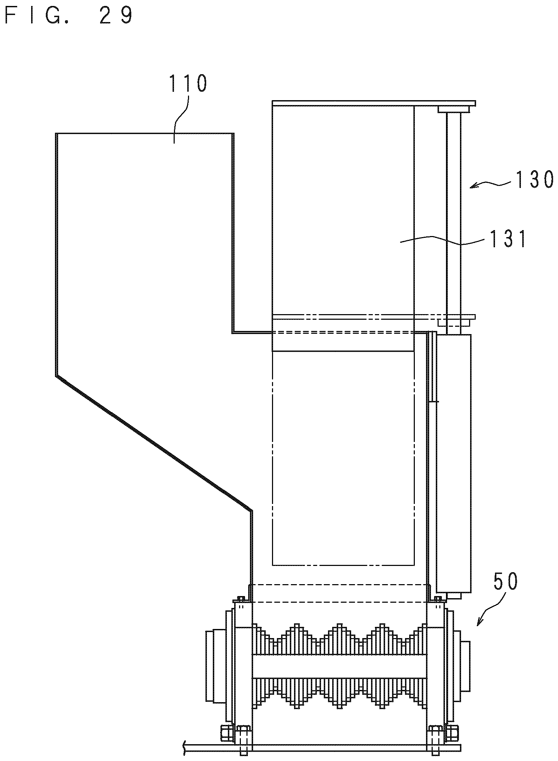

FIG. 29 is a side view illustrating one example of a vertical pusher 130. In FIG. 29, a granulating blade is visibly illustrated for convenience. When material-to-be granulated that is loaded from the loading hopper 110 fall toward the granulator blade of the granulator 50, a push-in portion 131 moves up and down by a guided air cylinder to thereby push the material-to-be granulated toward the granulating blade.

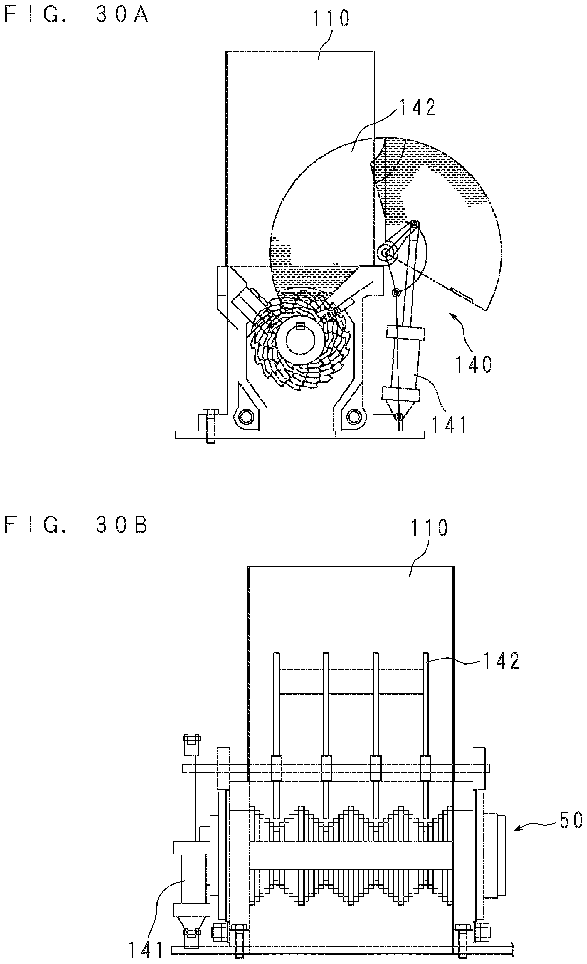

FIGs. 30A and 30B each illustrate an example of a rotative pusher 140. FIG. 30A is a configuration of the rotative pusher when viewed from the font while FIG. 30B is a configuration of the rotative pusher when viewed from a side. In FIG. 30, a granulating blade is visibly illustrated for convenience. When material-to-be granulated that is loaded from the loading hopper 110 fall toward the granulator blade of the granulator 50, a rotative push-in portion 142 is rotated by drive of a driving unit 141 to thereby push the material-to-be granulated toward the granulating blade.

Though a single-shaft granulator is described in the above-described embodiment, the granulator is not limited to the single-shaft granulator and may be a multi-shaft granulator. A double-shaft granulator will be described below.

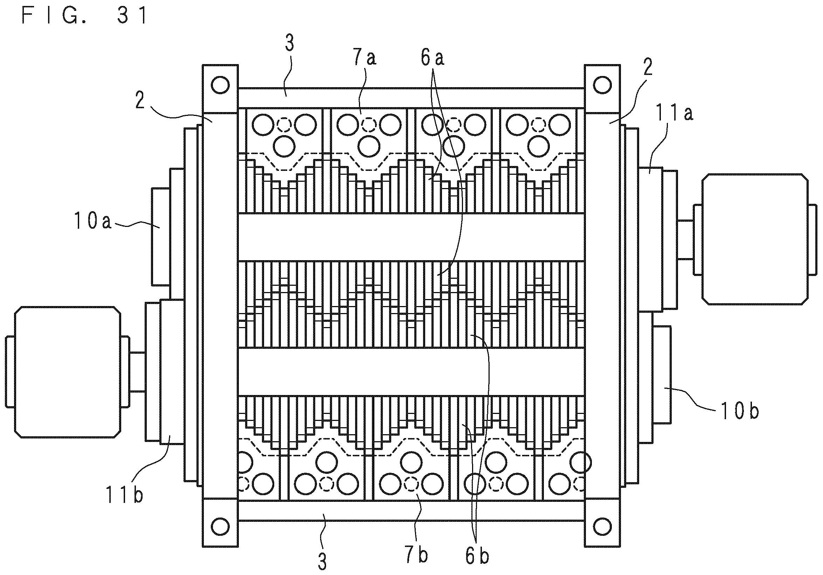

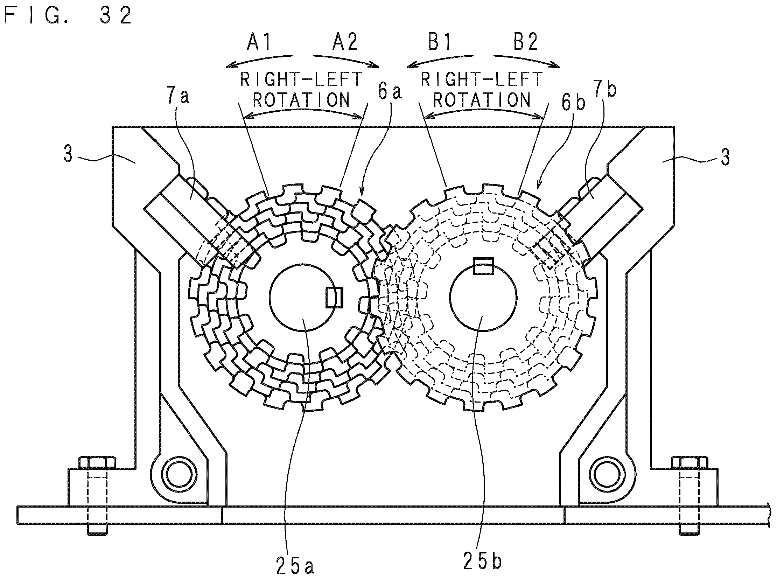

FIG. 31 is a plan view illustrating a first example of the configuration of the main components of a double-shaft granulator while FIG. 32 is a side view illustrating the first example of the configuration of the main components of the double-shaft granulator. A bearing 10a is mounted on one of the fixed side walls 2 while a reduction gear 11a attached with an electric motor is mounted on the other one of the fixed side walls 2. A rotating shaft 25a coordinating with the motor shaft of the electric motor via the reduction gear 11a is supported between the fixed side walls 2 and 2. Meanwhile, a bearing 10b is mounted on the other one of the fixed side walls 2 while a reduction gear 11b attached with an electric motor is mounted on the one of the fixed side walls 2. A rotating shaft 25b coordinating with the motor shaft of the electric motor via the reduction gear 11b is supported between the fixed side walls 2 and 2.

The space (granulation chamber) defined by the fixed side walls 2 and 2 and the pivotable side walls 3 and 3 accommodates granulation blades 6a as rotary blades fit onto the rotating shaft 25a and granulating blades 6b as rotary blades fit onto the rotating shaft 25b. A stationary blade 7a to be engaged with the granulating blade 6a is fixed on one of the pivotable side walls 3 while a stationary blade 7b to be engaged with the granulating blade 6b is fixed on the other one of the pivotable side walls 3.

As illustrated in FIG. 31, the granulating blades 6a and 6b are attached such that the position of the blade portion group provided with multiple blade portions having a larger radial dimension from the center of the rotating shaft 25a corresponds to the position of the blade portion group provided with multiple blade portions having a smaller radial dimension from the center of the rotating shaft 25b. In other words, the granulating blades 6a and 6b are attached such that the position of the blade portion group provided with multiple blade portions having a larger radial dimension from the center of the rotating shaft 25b corresponds to the position of the blade portion group provided with multiple blade portions having a smaller radial dimension from the center of the rotating shaft 25a. The blade portion group provided with multiple blade portions having a larger radial dimension has a relatively high granulating capability while the blade portion group provided with multiple blade portions having a smaller radial dimension has a relatively low granulating capability. The above-described configuration enables equalization of the granulating capability.

As illustrated in FIG. 32, the rotating shaft 25a can be rotated in the right-left direction (represented by the reference codes A1 and A2) while the rotating shaft 25b can be rotated in the right-left direction (represented by the reference codes B1 and B2). In the case of a normal operation (when a load is not so high), the rotating shaft 25a is rotated in the direction A1 while the rotating shaft 25b is rotated in the direction B2. When a load is high, the direction of rotation can be changed in the following order. That is, the rotating shaft 25a is rotated in the direction A1, and then the rotating shaft 25b is rotated in the direction B1. Next, the rotating shaft 25a is rotated in the direction A2, and the rotating shaft 25b is rotated in the direction B2. Thereafter, the rotating shaft 25a is rotated in the direction A2, and then the rotating shaft 25b is rotated in the direction B1.

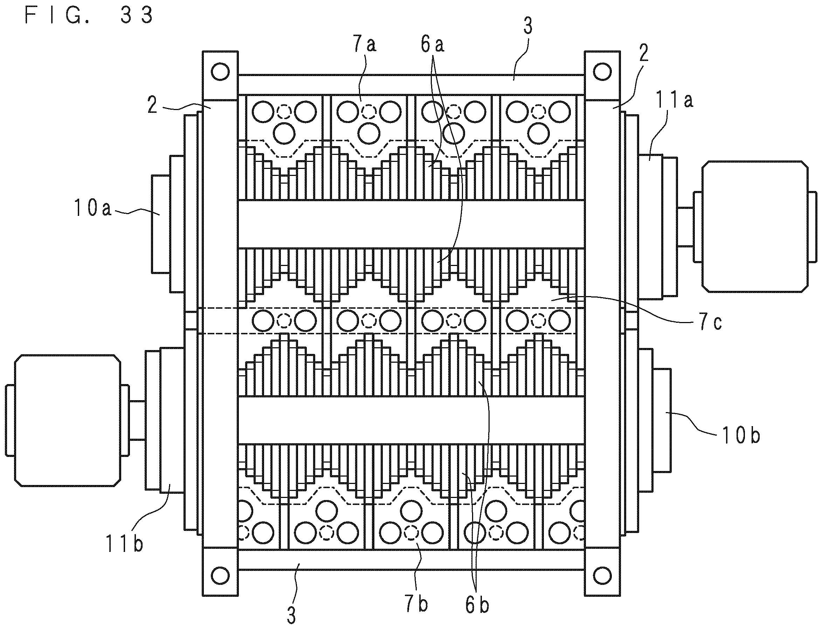

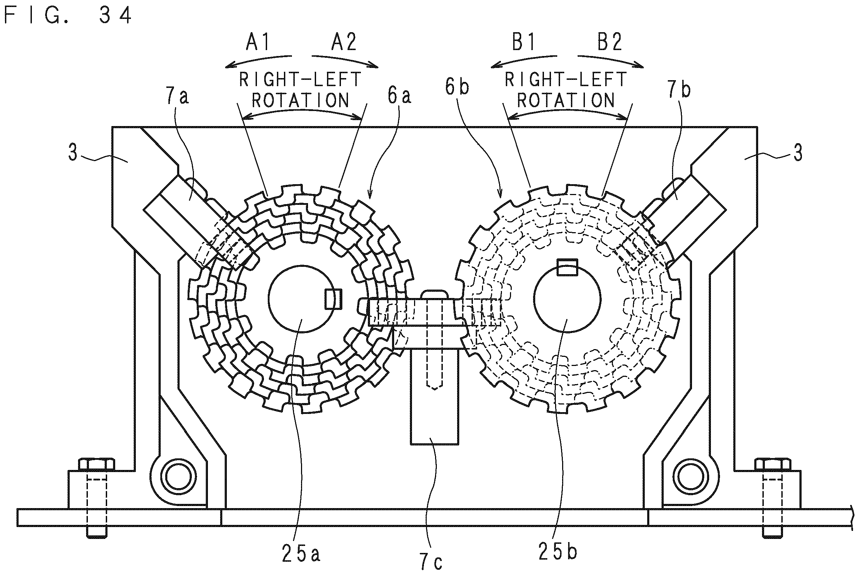

FIG. 33 is a plan view illustrating a second example of the configuration of the main components of the double-shaft granulator while FIG. 34 is a side view illustrating the second example of the configuration of the main components of the double-shaft granulator. The difference from the first example illustrated in FIGs. 31 and 32 is that a stationary blade 7c is provided. That is, the stationary blade 7c is provided between the granulating blade 6a and the granulating blade 6b. The stationary blade 7 is engaged with the granulating blade 6a and the granulating blade 6b to thereby granulate material-to-be granulated. The other configurations are similar to those in Embodiment 1, and description thereof will not be repeated. The provision of the stationary blade 7c can improve a granulating capability.

The granulator according to the present embodiment comprises a housing having an opening portion at an upper part, a rotary blade mounted to a rotating shaft horizontally placed in the housing and a stationary blade to be engaged with the rotary blade and placed in the housing, and granulates material-to-be granulated by cooperating with each other the rotary blade and the stationary blade. The rotary blade is provided with a plurality of blade portion groups arranged adjacent to each other along a direction of the rotating shaft, and each of the plurality of blade portion groups is provided with a plurality of blade portions formed about the rotating shaft at an outer periphery of a cylindrical body fit onto the rotating shaft.

The granulator comprises a housing having an opening portion at an upper part, a rotary blade (hereinafter referred to as a granulating blade) mounted to a rotating shaft horizontally placed in the housing and a stationary blade to be engaged with the rotary blade and placed in the housing. The rotary blade is provided with a plurality of blade portion groups arranged adjacent to each other along the direction of the rotating shaft. Each of the plurality of blade portion groups is provided with a plurality of blade portions formed about the rotating shaft at an outer periphery of a cylindrical body fit onto the rotating shaft. The plurality of blade portions are also referred to as an array of blades. That is, multiple arrays of blades are arranged adjacent to each other along the direction of the rotating shaft, so that there are no grooves between the arrays of blades.

There are no grooves between the arrays of blades, which can prevent a part of the material-to-be granulated from staying in the grooves.

In the granulator according to the present embodiment, each of the plurality of blade portions is formed with a cutting edge at the leading edge portion about the rotating shaft, and a radial dimension of the plurality of blade portions from a center of the rotating shaft decreases in a stepwise manner along the direction of the rotating shaft for each of the plurality of blade portion groups.

The radial dimension of the plurality of blade portions from the center of the rotating shaft decreases in a stepwise manner along the direction of the rotating shaft for each of the multiple blade portion groups. That is, the radial dimension of the arrays of blades from the center of the rotating shaft decreases along the direction of the rotating shaft for each of the multiple blade portion groups.

The radial dimension of each of the blade portions (array of blades) decreases in a stepwise manner along the direction of the rotating shaft, which facilitates the movement of material-to-be granulated toward the blade portion. The movement of the material-to-be granulated can further granulate the material. This can prevent generation of powder due to rubbing of the staying material-to-be granulated, resulting in uniform particle size of the granulated material.

In the granulator according to the present embodiment, one side end portion in a direction of the rotating shaft of each of a plurality of blade portions forming one blade portion group is in contact with a cylindrical body of another blade portion group adjacent to the one blade portion group, and the other side end portion of each of the plurality of blade portions in the direction of the rotating shaft is exposed.

One side end portion in a direction of the rotating shaft of each of a plurality of blade portions forming one blade portion group is in contact with a cylindrical body of another blade portion group adjacent to the one blade portion group. Another side end portion of each of the plurality of blade portions forming the one blade portion group in the direction of the rotating shaft is exposed. In other words, one side end portions of the array of blades are in contact with the adjacent cylindrical body formed with the array of blades while the other side end portions (i.e., the side end portion on the side on which the radial dimension of the array of blades decreases in a stepwise manner along the direction of the rotating shaft) are exposed. The side end portions of the array of blades are exposed, so that granulated material granulated by cooperating with each other the rotary blade and the stationary blade can freely drop away from the arrays of blades and can be collected in a predetermined collection box, etc.

In the granulator according to the present embodiment, an opposing wall of the housing that is provided on a side closer to the rotating shaft than the stationary blade and faces an end portion of the rotary blade having a minimum radial dimension from the center of the rotating shaft is provided with a slot forming a segment of a circular arc along an outer periphery of the end portion.

The slot forming a segment of a circular arc is provided on the opposing wall of the housing that faces the end portion of the rotary blade having the smallest radial dimension from the center of the rotating shaft along the outer periphery of the end portion.
The end portion, here, includes the blade portion group having the smallest radial dimension out of the multiple blade portion groups, or includes a cylindrical spacer if the spacer is disposed between the blade portion group having the smallest radial dimension and the housing. The slot forming a segment of a circular arc is provided along the outer periphery of the end portion, so that even if granulated material is caught between the end portion and the opposing wall of the housing, the material can be easily removed through the slot.

The granulator according to the present embodiment is formed with a cutting surface on each of the other side end portions of the plurality of blade portions.

The cutting surfaces are formed at the other side end portions of the multiple blade portions. That is, the cutting surfaces are formed at the exposed side end portions of the array of blades, which increases a granulation capability.

In the granulator according to the present embodiment, each of the plurality of blade portions is formed with a cutting edge at a trailing edge portion about the rotating shaft.

Each of the plurality of blade portions is formed with a cutting edge at a trailing edge portion about the rotating shaft. Thus, the cutting edges are formed at the trailing edge portions of the array of blades as well as the leading edge portions thereof. This enables reverse rotation of the rotary blade and extension of the life of the rotary blade. Furthermore, the reverse rotation of the rotary blade can further prevent the material-to-be granulated from staying.

In the granulator according to the present embodiment, a plurality of rotary blades are disposed at suitable intervals along the direction of the rotating shaft.

Multiple rotary blades can be disposed at suitable intervals along the direction of the rotating shaft. This makes it possible to increase the processed amount of the items to be granulated.

The granulator according to the present embodiment further comprises a large rotary blade having a curved arm shape at the leading edge portion about the rotating shaft and being mounted on the rotating shaft between the adjacent rotary blades.

The granulator is provided with a large rotary blade (also referred to as a crushing blade) that has a curved arm shape at the leading edge portion about the rotating shaft and is mounted on the rotating shaft between the adjacent rotary blades. The provision of the large rotary blade enables granulation of a sprue runner of a large shape.

In the granulator according to the present embodiment, the stationary blade has a stationary cutting surface to be engaged with the rotary blade, and the stationary cutting surface is formed in a stepwise manner so as to conform to leading edge portions of the plurality of blade portions forming the plurality of blade portion groups.

The stationary blade has a stationary cutting surface to be engaged with the rotary blade, and the stationary cutting surface is formed in a stepwise manner so as to conform to leading edge portions of the plurality of blade portions forming the plurality of blade portion groups. This makes it possible to prevent material-to-be granulated from staying and prevent generation of powder due to rubbing of the staying material-to-be granulated when the rotary blade and the small stationary blade cooperate with each other to granulate material-to-be granulated, resulting in uniform particle size of the granulated material.

The granulator according to the present embodiment further comprises a stationary plate fastened to the housing along the direction of the rotating shaft, and the stationary blade has a stationary cutting surface to be engaged with the rotary blade and is provided with a plurality of small stationary blades fastened to the stationary plate and spaced at suitable intervals.

The small stationary blades are fastened to the stationary plate so as to be spaced at suitable intervals along the direction of the rotating shaft, so that the small stationary blades can be fastened to the stationary plate by adjusting the intervals between the adjacent small stationary blades. In the case where the multiple blade portion groups of the rotary blade are arranged adjacent to each other along the direction of the rotating shaft, even if measuring errors of the blade portion groups are accumulated in the direction of the rotating shaft, the position of each of the small stationary blades is adjustable to thereby enable appropriate engagement between the rotary blade and the stationary blade.

In the granulator according to the present embodiment, each of the plurality of blade portions is formed with a cutting edge at the leading edge portion about the rotating shaft, and radial dimensions of the plurality of blade portions from the center of the rotating shaft are different between adjacent blade portion groups.

The radial dimensions of the plurality of blade portions from the center of the rotating shaft are different between adjacent blade portion groups. The radial dimensions of the blade portions (array of blades) are different between the adjacent blade portion groups, which allows material-to-be granulated to easily move toward the blade portions. The movement of the material-to-be granulated can further granulate the material. This can prevent generation of powder due to rubbing of the staying material-to-be granulated, resulting in uniform particle size of the granulated material.

The granulator according to the present embodiment further comprises a first blade portion group having a large radial dimension of each of the plurality of blade portions from the center of the rotating shaft, and a second blade portion group adjacent to the first blade portion group and having a small radial dimension of each of the plurality of blade portions from the center of the rotating shaft. The cylindrical bodies of two first blade portion groups adjacent to the second blade portion group are arranged so as to face with each other across a gap between neighboring blade portions of the second blade portion group, and a dimension of each of the cylindrical bodies in a direction of the rotating shaft decreases radially from the center of the rotating shaft.

The granulator is provided with a first blade portion group having a large radial dimension of each of the plurality of blade portions from the center of the rotating shaft, and a second blade portion group adjacent to the first blade portion group and having a small radial dimension of each of the plurality of blade portions from the center of the rotating shaft. The cylindrical bodies of two first blade portion groups adjacent to the second blade portion group are arranged so as to face with each other across a gap between neighboring blade portions of the second blade portion group. The dimension of each of the cylindrical bodies in the direction of the rotating shaft (width dimension) decreases radially from the center of the rotating shaft.

According to the above-described configuration, even if material-to-be granulated enters the gap between the neighboring blade portions forming the second blade portion group, each of the cylindrical bodies is tapered so as to radially decrease in the width direction to thereby exert an elastic reaction force on the material-to-be granulated from the cylindrical body, resulting in discharge of the material from the gap. This can prevent generation of powder due to rubbing of the staying material-to-be granulated, resulting in uniform particle size of the granulated material.

In the granulator according to the present embodiment, a dimension about the rotating shaft of each of the plurality of blade portions forming the second blade portion group radially decreases from the center of the rotating shaft.

The dimension about the rotating shaft of each of the plurality of blade portions forming the second blade portion group radially decreases from the center of the rotating shaft. Hence, even if material-to-be granulated enters the gap between the neighboring blade portions forming the second blade portion group, each blade portion exerts an elastic reaction force on the material to thereby discharge the material from the gap. This can prevent generation of powder due to rubbing of the staying material-to-be granulated, resulting in uniform particle size of the granulated material.

In the granulator according to the present embodiment, each of the plurality of blade portions is formed with a cutting edge at the leading edge portion about the rotating shaft, and a radial dimension of each of the plurality of blade portions from the center of the rotating shaft is equal for adjacent blade portion groups.

Each of the plurality of blade portions is formed with a cutting edge at the leading edge portion about the rotating shaft, and a radial dimension of each of the plurality of blade portions from the center of the rotating shaft is equal for adjacent blade portion groups. This can uniformize the blade portion groups, which can make the cutting edge of the stationary blade linear, resulting in a simple shape of the stationary blade.

In the granulator according to the present embodiment, a gap is provided between neighboring blade portions forming one blade portion group, and blade portions of two other blade portion groups adjacent to the one blade portion group are arranged so as to face with each other across the gap.

A gap is provided between neighboring blade portions forming one blade portion group, and blade portions of two other blade portion groups adjacent to the one blade portion group are arranged so as to face with each other across the gap. Thus, the gap between the neighboring blade portions of one blade portion group and the gap between the neighboring blade portions of the other blade portion group are not overlaid with each other along the direction of the rotating shaft. This can prevent generation of powder due to rubbing of the staying material-to-be granulated, resulting in uniform particle size of the granulated material.

The granulator according to the present embodiment further comprises a first rotary shaft and a second rotary shaft that are provided with respective rotary blades and horizontally placed within the housing. The rotary blades are attached such that a position of a blade portion group provided with a plurality of blade portions having an increasing radial dimension from the center of the first rotary shaft corresponds to a position of a blade portion group provided with a plurality of blade portions having a decreasing radial dimension from the center of the second rotary shaft.

The rotary blades are attached such that a position of a blade portion group provided with a plurality of blade portions having an increasing radial dimension from the center of the first rotary shaft corresponds to a position of a blade portion group provided with a plurality of blade portions having a decreasing radial dimension from the center of the second rotary shaft. The blade portion group having a larger radial dimension has a relatively high granulating capability while the blade portion group having a smaller radial dimension has a relatively low granulating capability. The above-described configuration enables equalization of the granulating capability.

It is noted that at least parts of the above-mentioned embodiments may arbitrarily be combined.

### [Description of Reference Numerals]

- 2: fixed side wall (housing)
- 3: pivotable side wall (housing)
- 4: crushing blade (large rotary blade)
- 6, 6a, 6b: granulating blade (rotary blade)
- 7, 7a, 7b, 7c: stationary blade
- 8: fall prevention plate
- 9: spacer
- 22: inside wall
- 23: slot
- 25, 25a, 25b: rotating shaft
- 50: granulator
- 60: blade portion group
- 61, 61a, 61b, 91, 161, 261: blade portion
- 62, 162, 262: cylindrical body
- 611, 615: cutting edge
- 612, 613: side end portion
- 72: stationary plate
- 73: small stationary blade
- 120, 130, 140: pusher
- 161a, 261a: leading edge portion or trailing edge portion
- 161b, 162b: tapered surface
- 162a, 262a: outer periphery
- 171, 172: bolt

## Claims

1. A granulator comprising a housing having an opening portion at an upper part, a rotary blade mounted to a rotating shaft horizontally placed in the housing and a stationary blade to be engaged with the rotary blade and placed in the housing, and granulating to-be-granulated material by cooperating with each other the rotary blade and the stationary blade, wherein
the rotary blade is provided with a plurality of blade portion groups arranged adjacent to each other along a direction of the rotating shaft, and
each of the plurality of blade portion groups is provided with a plurality of blade portions formed about the rotating shaft at an outer periphery of a cylindrical body fit onto the rotating shaft.

2. The granulator according to claim 1, wherein
each of the plurality of blade portions is formed with a cutting edge at the leading edge portion about the rotating shaft, and
a radial dimension of the plurality of blade portions from a center of the rotating shaft decreases in a stepwise manner along the direction of the rotating shaft for each of the plurality of blade portion groups.

3. The granulator according to claim 1 or 2, wherein
one side end portion in a direction of the rotating shaft of each of a plurality of blade portions forming one blade portion group is in contact with a cylindrical body of another blade portion group adjacent to the one blade portion group, and
the other side end portion of each of the plurality of blade portions in the direction of the rotating shaft is exposed.

4. The granulator according to any one of claims 1 to 3, wherein an opposing wall of the housing that is provided on a side closer to the rotating shaft than the stationary blade and faces an end portion of the rotary blade having a minimum radial dimension from the center of the rotating shaft is provided with a slot forming a segment of a circular arc along an outer periphery of the end portion.

5. The granulator according to claim 3 formed with a cutting surface on each of the other side end portions of the plurality of blade portions.

6. The granulator according to any one of claims 1 to 5, wherein each of the plurality of blade portions is formed with a cutting edge at a trailing edge portion about the rotating shaft.

7. The granulator according to any one of claims 1 to 5, wherein a plurality of rotary blades are disposed at suitable intervals along the direction of the rotating shaft.

8. The granulator according to claim 7, further comprising a large rotary blade having a curved arm shape at the leading edge portion about the rotating shaft and being mounted on the rotating shaft between the adjacent rotary blades.

9. The granulator according to any one of claims 1 to 8, wherein the stationary blade has a stationary cutting surface to be engaged with the rotary blade, and the stationary cutting surface is formed in a stepwise manner so as to conform to leading edge portions of the plurality of blade portions forming the plurality of blade portion groups.

10. The granulator according to any one of claims 1 to 9, further comprising a stationary plate fastened to the housing along the direction of the rotating shaft, and
the stationary blade has a stationary cutting surface to be engaged with the rotary blade and is provided with a plurality of small stationary blades fastened to the stationary plate and spaced at suitable intervals.

11. The granulator according to claim 1, wherein each of the plurality of blade portions is formed with a cutting edge at the leading edge portion about the rotating shaft, and radial dimensions of the plurality of blade portions from the center of the rotating shaft are different between adjacent blade portion groups.

12. The granulator according to claim 11, further comprising
a first blade portion group having a large radial dimension of each of the plurality of blade portions from the center of the rotating shaft, and a second blade portion group adjacent to the first blade portion group and having a small radial dimension of each of the plurality of blade portions from the center of the rotating shaft, wherein
cylindrical bodies of two first blade portion groups adjacent to the second blade portion group are arranged so as to face with each other across a gap between neighboring blade portions of the second blade portion group, and
a dimension of each of the cylindrical bodies in a direction of the rotating shaft decreases radially from the center of the rotating shaft.

13. The granulator according to claim 12, wherein a dimension about the rotating shaft of each of the plurality of blade portions forming the second blade portion group radially decreases from the center of the rotating shaft.

14. The granulator according to claim 1, wherein
each of the plurality of blade portions is formed with a cutting edge at the leading edge portion about the rotating shaft, and
a radial dimension of each of the plurality of blade portions from the center of the rotating shaft is equal for adjacent blade portion groups.

15. The granulator according to claim 14, wherein a gap is provided between neighboring blade portions forming one blade portion group, and blade portions of two other blade portion groups adjacent to the one blade portion group are arranged so as to face with each other across the gap.

16. The granulator according to claim 2, further comprising a first rotary shaft and a second rotary shaft that are provided with respective rotary blades and horizontally placed within the housing, wherein
the rotary blades are attached such that a position of a blade portion group provided with a plurality of blade portions having an increasing radial dimension from the center of the first rotary shaft corresponds to a position of a blade portion group provided with a plurality of blade portions having a decreasing radial dimension from the center of the second rotary shaft.
